# EUROPEAN PATENT SPECIFICATION

(11) **EP 4 202 366 B1**
(45) Date of publication and mention of the grant of the patent: **20.11.2024**
(21) Application number: 22215834.7
(22) Date of filing: 22.12.2022
(51) Int. Cl.: G01C 21/20, G01C 21/34, G05D 1/00, G08G 5/00

(54) **BUFFER-AWARE NAVIGATION FOR A VEHICLE**
PUFFERBEWUSSTE NAVIGATION FÜR EIN FAHRZEUG
NAVIGATION SENSIBLE À LA MÉMOIRE TAMPON POUR UN VÉHICULE

(30) Priority: 23.12.2021 FI 20216336
(43) Date of publication of application: 28.06.2023
(73) Proprietor: Nokia Technologies Oy, 02610 Espoo (FI)
(72) Inventor: SUVITIE, Arto Kristian, Helsinki (FI)
(74) Representative: Sayer, Robert David

(56) References cited:
- US-A1- 2005 192 749
- US-A1- 2019 113 931
- CHEN YUTONG ET AL: "Real-Time Autonomous Trajectory Conflict Detection and Resolution in Restricted Airspace", 2020 INTEGRATED COMMUNICATIONS NAVIGATION AND SURVEILLANCE CONFERENCE (ICNS), IEEE, 8 September 2020 (2020-09-08), XP033841480, DOI: 10.1109/ICNS50378.2020.9223004

## Description

### TECHNOLOGICAL FIELD

An example embodiment relates generally to vehicle navigation, pathfinding, path planning, and/or the like. More particularly, an example embodiment includes techniques for navigation of a vehicle while respecting constraint areas present in the surrounding environment.

### BACKGROUND

In performing various tasks, a vehicle may navigate within an environment that may include one or more constraint areas, or areas within which the vehicle is prevented, precluded, barred, and/or the like from being positioned. Navigation of the vehicle must be configured and defined such that the vehicle respects the constraint areas at all times. However, due to some error and inaccuracy of positioning systems for the vehicle, a vehicle travelling along a navigation path that respects constraint areas may, in reality, inadvertently and erroneously trespass into some constraint areas, constraint areas may occur due to erroneous navigation guidance relating to the planned navigation path. In other words, positioning errors and inaccuracy of positioning systems may cause discrepancies between a navigation path and a truly traveled path to exist and may increase the challenges associated with navigation around constraint areas, or escaping constraint areas. US2019/113931 A1 discloses an autonomous working system and an autonomous vehicle and steering method. Chen Yutong et al, "Real-Time Autonomous Trajectory Conflict Detection and Resolution in Restricted Airspace," 2020 Integrated Communications Navigation and Surveillance Conference (ICNS), IEEE, 8 September 2020 discloses a method for real-time autonomous trajectory conflict detection and resolution in restricted airspace.

### BRIEF SUMMARY

The scope of protection sought for various embodiments of the invention is set out by the independent claims. Embodiments and features, if any, described in this specification that do not fall under the scope of the independent claims are to be interpreted as examples useful for understanding various embodiments of the invention. In general, various embodiments of the present disclosure provide apparatuses, methods, computer program products, computing devices, systems, and/or the like for providing navigation for a vehicle that respects constraint areas. For instance, various embodiments enable vehicle navigation that, even in light of positioning errors and inaccuracy of a positioning system, result in the vehicle respecting constraint areas at all times. In particular, various embodiments involve establishment of threshold distances, or buffers, from each constraint area such that, in example instances in which a vehicle is travelling along a path close to or near the threshold distance from a constraint area, the vehicle is still positioned far enough away from the constraint area to not trespass into,
violate, collide with, and/or the like the constraint area. In various embodiments, navigation paths are planned with respect to such threshold distances or buffers so that vehicles travelling along planned navigation paths maintain sufficient distance away from constraint areas to ensure against constraint area trespassing due to positioning errors and inaccuracy of a positioning system. This may specifically involve use of a visibility graph having nodes positioned beyond the threshold distance away from constraint areas (e.g., thereby defining a buffer or safety margin around each constraint area), and navigation paths may include edges of the visibility graph that connect said nodes.

Further, various embodiments enable vehicle navigation in example instances in which a vehicle is positioned within the threshold distance or buffer of a constraint area. This positioning within a buffer may be due to the aforementioned positioning error and inaccuracy, manual user operation of the vehicle, and/or the like. To overcome this, various embodiments provide buffer-aware navigation that may include projecting and navigating the vehicle out of the buffer of a constraint area and subsequently navigating the vehicle to a target location.

According to one aspect of the present disclosure, an apparatus according to claim 1 is provided.

In various embodiments, the projected location of the vehicle is generated based at least in part on minimizing a distance between the projected location of the vehicle and the obtained location of the vehicle. In various embodiments, a projection of the plurality of projections is at least substantially normal to a respective segment. In various embodiments, the projected location is positioned opposite of the particular segment by a configurable distance based at least in part on an accuracy associated with the obtained location of the vehicle and/or the length of the respective projection.

In various embodiments, the location of the vehicle is within a permitted zone defined by a surrounding constraint area, and the plurality of nodes are positioned at least the threshold distance interior to the surrounding constraint area and at least the threshold distance exterior to one or more constraint areas positioned within the environment perimeter. In various embodiments, the updated path includes a first portion spanning from the obtained location of the vehicle to the projected location and a second portion spanning from the projected location through one or more nodes and one or more segments of the first navigation path (e.g., a visibility graph) to a target location. In various embodiments, the one or more constraint areas include a constraint area defined based at least in part on confined and repeated historical movement of the vehicle.

According to one aspect of the present disclosure, a method according to claim 10 is provided.

In various embodiments, the projected location of the vehicle is generated based at least in part on minimizing a distance between the projected location of the vehicle and the obtained location of the vehicle. In various embodiments, a projection of the plurality of projections is at least substantially normal to a respective segment. In various embodiments, the projected location is positioned opposite of the particular segment by a configurable distance based at least in part on an accuracy associated with the obtained location of the vehicle and/or the length of the respective projection.

According to another aspect of the present disclosure, a computer program product according to claim 15 is provided.

The above summary is provided merely for purposes of summarizing some example embodiments to provide a basic understanding of some aspects of the present disclosure. Accordingly, it will be appreciated that the above-described embodiments are merely examples and should not be construed to narrow the scope of the present disclosure in any way. It will be appreciated that the scope of the present disclosure encompasses many potential embodiments in addition to those here summarized, some of which will be further described below. Other features, aspects, and advantages of the subject matter will become apparent from the description, the drawings, and the claims.

### BRIEF DESCRIPTION OF THE DRAWINGS

Having thus described certain example embodiments of the present disclosure in general terms above, non-limiting and non-exhaustive embodiments of the subject disclosure will now be described with reference to the accompanying drawings which are not necessarily drawn to scale. The components illustrated in the accompanying drawings may or may not be present in certain embodiments described herein. Some embodiments may include fewer (or more) components than those shown in the drawings.
Figure 1 is a diagram of an example system architecture for providing buffer-aware navigation for a vehicle, in accordance with various embodiments;
Figure 2 is a block diagram of an example apparatus configured for providing buffer-aware navigation for a vehicle, in accordance with various embodiments;
Figures 3A-B illustrate example scenarios in which buffer-aware navigation is provided for a vehicle such that the vehicle may respect various constraint areas, in accordance with various embodiments;
Figures 4A-D illustrate an example scenario in which buffer-aware navigation is provided for a vehicle that is trespassing into a buffer for a constraint area, in accordance with various embodiments;
Figures 5A and 5B illustrates another example scenario in which buffer-aware navigation is provided for a vehicle, in accordance with various embodiments;
Figure 6 illustrates an example scenario in which buffer-aware navigation is provided for a vehicle traveling in a loop, in accordance with various embodiments; and
Figure 7 provides a flowchart describing example operations performed for providing buffer-aware navigation for a vehicle, in accordance with various embodiments.

### DETAILED DESCRIPTION

Some embodiments of the present disclosure will now be described more fully hereinafter with reference to the accompanying drawings, in which some, but not all, embodiments of the present disclosure are shown. Indeed, various embodiments of the present disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," "electronic information," "signal," "command," and similar terms may be used interchangeably to refer to data capable of being captured, transmitted, received, and/or stored in accordance with various embodiments of the present disclosure. Thus, use of any such terms should not be taken to limit the scope of embodiments of the present disclosure. Further, where a first computing device is described herein to receive data from a second computing device, it will be appreciated that the data may be received directly from the second computing device or may be received indirectly via one or more intermediary computing devices, such as, for example, one or more servers, relays, routers, network access points, base stations, hosts, repeaters, and/or the like, sometimes referred to herein as a "network." Similarly, where a first computing device is described herein as sending data to a second computing device, it will be appreciated that the data may be sent or transmitted directly to the second computing device or may be sent or transmitted indirectly via one or more intermediary computing devices, such as, for example, one or more servers, remote servers, cloud-based servers (e.g., cloud utilities), relays, routers, network access points, base stations, hosts, repeaters, and/or the like.

The term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of. Furthermore, to the extent that the terms "includes" and "including," and variants thereof are used in either the detailed description or the claims, these terms are intended to be inclusive in a manner similar to the term "comprising."

The phrases "in one embodiment," "according to one embodiment," "in some embodiments," "in various embodiments", and the like generally refer to the fact that the particular feature, structure, or characteristic following the phrase may be included in the at least one embodiment of the present disclosure, but not necessarily all embodiments of the present disclosure. Thus, the particular feature, structure, or characteristic may be included in more than one embodiment of the present disclosure such that these phrases do not necessarily refer to the same embodiment.

As used herein, the terms "example," "exemplary," and the like are used to mean "serving as an example, instance, or illustration." Any implementation, aspect, or design described herein as "example" or "exemplary" is not necessarily to be construed as preferred or advantageous over other implementations, aspects, or designs. Rather, use of the terms "example," "exemplary," and the like are intended to present concepts in a concrete fashion.

If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

As used herein, the term "computer-readable medium" refers to non-transitory storage hardware, non-transitory storage device or non-transitory computer system memory that may be accessed by a controller, a microcontroller, a computational system or a module of a computational system to encode thereon computer-executable instructions or software programs. A non-transitory "computer-readable medium" may be accessed by a computational system or a module of a computational system to retrieve and/or execute the computer-executable instructions or software programs encoded on the medium. Examples of non-transitory computer-readable media may include, but are not limited to, one or more types of hardware memory, non-transitory tangible media (for example, one or more magnetic storage disks, one or more optical disks, one or more universal serial bus (USB) flash drives), computer system memory or random-access memory (such as, dynamic random access memory (DRAM), static random access memory (SRAM), extended data out random access memory (EDO RAM)), and/or the like.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

In autonomous, semi-autonomous, and manual navigation of a vehicle, a target location or destination is specified, and generally, a path with a minimized length (in distance and/or the time required for navigation) is planned from the vehicle's current location to the target location. In planning such a path, various constraint areas should be considered and respected. Generally, a constraint area may refer to an area within which the vehicle cannot be positioned, an area of a part of a path where the vehicle is instructed to repeat already travelled part of path and/or an area through which the vehicle cannot traverse; for example, a constraint area may be a No-Fly Zone, a large physical object or barrier, an untraversable and/or hostile region, a region owned or controlled by another party, another vehicle, and/or the like.

In various example instances, one or more constraint areas may be positioned between the vehicle's current location and the target location, and in order to minimize a path along which the vehicle navigates to the target location, the planned path may include portions that may skirt, approach, and/or pass near the one or more constraint areas. However, due to positioning errors and inaccuracies related to positioning, a vehicle travelling and/or being guided by a path that approaches or passes near a constraint area may inadvertently and unknowingly trespass into the constraint area due to its proximity. In some examples, a path planned according to path length minimization may trace along a border defining a constraint area, which presents a significant risk of a vehicle trespassing into or violating the constraint area.

To address this risk, various embodiments provide buffer-aware navigation for vehicles that may be autonomous, semi-autonomous, manually operated, and/or the like. In various embodiments, a visibility graph may be defined and used to determine a navigation path. Specifically, the visibility graph may include nodes positioned at least a threshold distance away (or beyond the threshold distance from) from all constraint areas and may include edges connecting such nodes. A navigation path may then be determined along such edges and nodes to ensure that the navigation path maintains at least the threshold distance away from constraint areas. In various example embodiments, the threshold distance from constraint areas may be embodied as a buffer for each constraint area, with the visibility graph being defined in a space outside of the buffers of each constraint area. The threshold distances or buffers may be defined such that, even with positioning errors and inaccuracies of a positioning system, a vehicle travelling and/or guided along or near the buffer of a constraint area may not violate the constraint area. In some examples, nodes of the visibility graph may be positioned at the threshold distance from constraint areas and/or may serve as vertices defining buffers around constraint areas such that buffer-respecting paths can be planned with minimized path length. In various embodiments, the navigation path may be determined to comprise edges (e.g., of a visibility graph), lanes, segments, nodes, and/or the like. Terminology of the navigation path itself and/or various components thereof may depend on a specific navigation type or purpose, a visibility graph, a navigation mesh, turn-by-turn navigation, navigation algorithms, and/or the like, for example.

Various embodiments of the present disclosure can be used to break vehicles out of an erroneously and repeatedly travelled loop. Thus, in various embodiments, a constraint area can be identified by a location of a vehicle, which may be positioned within a buffer of the constraint area, and/or a constraint area can be dynamically defined after detection that the vehicle is repeatedly travelling in a confined area and/or within only a subset of a navigation path, for example. In dynamically defining a constraint area, a vehicle can be forced to proceed along a navigation path and/or escape from an area in which the vehicle has been confined and repeatedly looping. As such, various embodiments can address technical challenges that may arise when a vehicle may be travelling back and forth along only a portion of a navigation path and is not able to escape from the repeatedly travelled portion of the navigation path.

As used herein, the terms "visible" and "visibility" may be used to describe direct reachability or accessibility between two locations, such as two nodes of a visibility graph. That is, the edges of the visibility graph connecting nodes that are visible to each other may not intersect with constraint areas, and thus, a vehicle may travel along edges of the visibility graph without trespassing into constraint areas. In some examples, visibility is defined with respect to two, three, and/or the like dimensions, and nodes of the visibility graph may be associated with a latitude, longitude, and elevation, for example. As such, travel along an edge of the visibility graph may be within a two-dimensional space, a three-dimensional space, and/or the like.

Thus, in various embodiments, path planning and pathfinding is performed through nodes of a visibility graph that respect the threshold distances or buffers of constraint areas. Further, buffer-aware navigation provided by various embodiments described herein is configured to handle example scenarios in which a vehicle is positioned within the threshold distance or buffer of a constraint area. Due to the visibility graph being defined outside of the threshold distance or buffer of the constraint areas, a vehicle positioned as such (e.g., within the threshold distance or buffer of the constraint areas) may be understood as invisible or inaccessible by the visibility graph, thereby raising challenges in pathfinding. Pathfinding logic and algorithms may not be configured to determine navigation paths that include portions within the threshold distance or buffer of constraint areas, thus, a navigation path from the vehicle's location within the threshold distance or buffer of a constraint area may not be determined, in some examples.

As such, with buffer-aware navigation provided by various embodiments described herein, the vehicle location that is positioned within a threshold distance or buffer of a constraint area may be projected out of the threshold distance or buffer of the constraint area, such that a projected location of the vehicle can be connected to the visibility graph for determination of a navigation path to a target location. In various embodiments, the vehicle location is projected to the nearest portion (e.g., an edge, a node) of the visibility graph, such that a distance between the vehicle location and the projected location is reduced (e.g., minimized).

Accordingly, one or more embodiments described herein provide technical advantages in extending navigational functionality for vehicles to account for constraint areas as well as potential positioning errors and inaccuracies of a positioning system. With various embodiments described herein, constraint areas remain respected due to establishing navigation paths through a visibility graph defined to be at least a threshold distance or a buffer away from constraint areas to account for positioning errors and inaccuracies of a positioning system. As such, a need for any remedial actions that arise from inadvertently violating a constraint area and/or remedial resources is obviated. Further, local processing and computing resources of the vehicle are conserved, as various embodiments eliminate or at least reduce both a need to implement navigational logic to handle violation of constraint areas to be performed by the vehicle. Thus, for example, the autonomous vehicle may instead dedicate processing and computing resources to other tasks.

Additionally, various embodiments provide improved applicability, as a navigation path can be determined for a vehicle positioned within the threshold distance or buffer of a constraint area without confounding pathfinding logic or algorithms for a visibility graph that may not be configured to determine navigation paths that venture into said threshold distance or buffer of constraint areas. That is, while a vehicle's location may not directly connect to a visibility graph for pathfinding purposes due to being within the threshold distance or buffer of a constraint area, the vehicle's location can be projected into a space that does connect to the visibility graph such that pathfinding may be performed. As such, various challenges and faults that may arise in pathfinding using a visibility graph are addressed in various embodiments described herein.

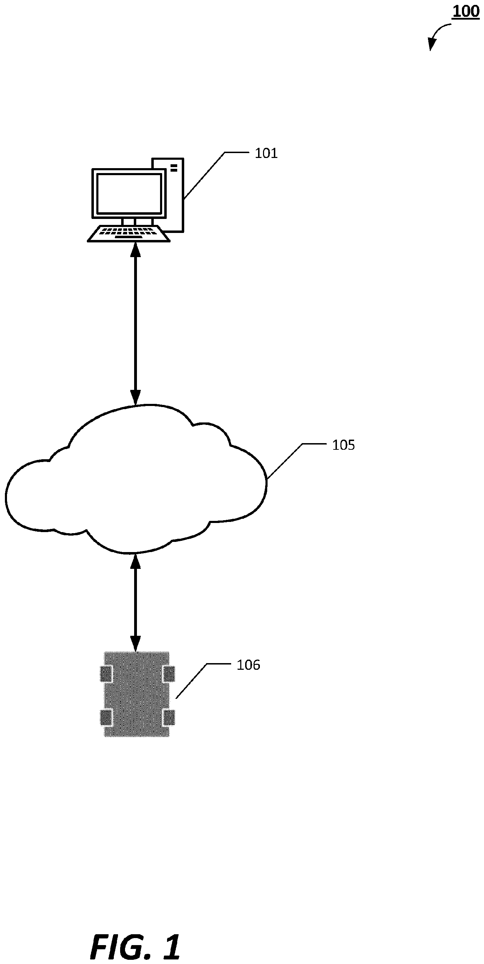

Referring now to Figure 1, an example system architecture 100 within which embodiments disclosed herein may operate is illustrated. It will be appreciated that the system architecture 100 as well as the illustrations in other figures are each provided as an example of some embodiments and should not be construed to narrow the scope of the disclosure in any way. In this regard, the scope of the disclosure encompasses many potential embodiments in addition to those illustrated and described herein. As such, while Figure 1 illustrates one example of a configuration of such a system, numerous other configurations may also be employed. As discussed, various embodiments of the present disclosure are directed to providing buffer-aware navigation for a vehicle, and Figure 1 illustrates a system architecture 100 including a navigation control system 101 configured to provide buffer-aware navigation to a vehicle 106 such that the vehicle 106 is guided to a target location without trespassing into constraint areas. In various embodiments, the buffer-aware navigation provided by the navigation control system 101 to the vehicle 106 enables the vehicle 106 to navigate without inadvertently and/or unknowingly trespassing into constraint areas and also enables the vehicle 106 to navigate if the vehicle 106 happens to be positioned within a threshold distance or buffer of a constraint area.

In various examples, the navigation control system 101 may be embodied by a ground control station that communicates with and/or remotely operates the vehicle 106. In further examples, functionalities or parts of the functionalities of the navigation control system 101 may be implemented by the vehicle 106 itself. For instance, the vehicle 106 itself may comprise the navigation control system 101 as an in-built or on-board device, and the navigation control system 101 may directly communicate with and/or directly operate various other components of the vehicle 106, including steering mechanisms, power mechanisms, positioning mechanisms, and/or the like. In yet another example, the navigation control system 101 may be embodied by another vehicle, such as a leader vehicle configured to handle navigation for the vehicle 106. For instance, the vehicle 106 may be one of a fleet of drones that follow and are guided by a leader drone. Generally, as may be understood through these examples, it may be preferable for navigation of the vehicle 106 to be handled by the navigation control system 101 (e.g., a ground control station, a leader vehicle) in order to minimize navigational processing and computing of the vehicle 106 locally, natively, on-board, and/or similar terms used interchangeably herein.

While certain embodiments described herein may be understood as referring to vehicles as real-world physical entities, it is to be appreciated that the operations discussed herein may be performed with other agents, such as digital entities in a virtual setting (e.g., video game characters and/or entities, entities within a simulation, and/or the like). Furthermore, the term "vehicles" used herein may encompass any type of robot or vehicle, such as autonomous robots, drones, and/or the like as well as the digital entities in a virtual setting. For example, the term "vehicle" may refer to a manually operated vehicle, a fully-autonomous vehicle, a partially-autonomous vehicle, a vehicle with some degree of autonomy, and/or the like. For example, in some embodiments, a plurality of vehicles may comprise vehicles of different types, such as autonomous robots, vehicles, drones, boats, and/or the like, that may move along navigation paths in various manners, such as by moving along the ground, water, flying, and/or the like.

In some embodiments, the navigation control system 101 is configured to cause transmission of data, such as a data indicating a determined navigation path (and, e.g., waypoints thereof) and instructions to navigate according to the determined navigation path, to the vehicle 106, via a network 105 for example. Similarly, the navigation control system 101 is configured to receive data originating from the vehicle 106, such data including positional telemetry for example, via the network 105. In various embodiments, the navigation control system 101 is configured to interact with more than one vehicle 106 (e.g., in parallel) via the network 105 and to provide buffer-aware navigation for each vehicle 106 and respective target locations.

Generally then, the navigation control system 101 may communicate with the vehicle 106 and/or other external computing devices using the network 105. The network 105 may include any wired or wireless communication network including, for example, a wired or wireless local area network (LAN), personal area network (PAN), metropolitan area network (MAN), wide area network (WAN), or the like, as well as any hardware, software and/or firmware required to implement the network (such as network routers and/or the like). For example, the network 105 may include a radio access architecture based at least in part on long term evolution advanced (LTE Advanced, LTE-A), new radio (NR, 5G), universal mobile telecommunications system (UMTS) radio access network (UTRAN or E-UTRAN), long term evolution (LTE, E-UTRA), an 802.11, 802.16, 802.20, WiMax network, and/or the like.

In various embodiments, the network 105 includes a new radio or 5G network enabling sidelink communications, in which the navigation control system 101 and the vehicle 106 may communicate with each other directly without requiring relaying of data through a radio access network. In such embodiments, the navigation control system 101 (e.g., a ground control station, a leader vehicle) and the vehicle 106 may create their own ad hoc network for communication without a radio access network acting as an intermediary. As such, communication between the navigation control system 101 and the vehicle 106 may be improved with increased efficiency and speed. In certain embodiments in which the navigation control system 101 is embodied by a leader vehicle, the leader vehicle may be configured to provide buffer-aware navigation for each of a group, unit, convoy, fleet, and/or the like of vehicles via sidelink communications enabled through a new radio or 5G network of the network 105.

Further, the network 105 may include a public network (e.g., the Internet), a private network (e.g., an intranet), and/or combinations thereof, and may utilize a variety of networking protocols now available or later developed, such as Transmission Control Protocol/Internet Protocol (TCP/IP) based networking protocols. In some examples, the networking protocol may be customized to suit the needs of the navigation control system 101.

In various embodiments, the navigation control system 101 may control or guide one or more vehicles 106 over a Long-Term Evolution (LTE) network or any other cellular network, such as new radio (NR, 5G) for example. A vehicle 106 and the navigation control system 101 may comprise a radio modem such that navigation control system 101 may communicatively control and/or guide the vehicle 106. Within the context of the cellular network embodying the network 105, the navigation control system 101 may comprise and/or be embodied by one or more user equipments (UEs) connected to at least one base station, and the vehicle 106 itself may also be connected to at least one base station. In various embodiments, the navigation control system 101 and/or the vehicle 106 may comprise an LTE modem with a registered subscriber identity module (SIM) to enable connection to an LTE network (e.g., embodying network 105) and may further comprise antennas connected with the LTE modem for improved range. The embedded SIM (piece of hardware that acts as a secure container to store the eSIM profile) also called as eSIM or eUICC or embedded Universal Integrated Circuit Card is a new secure element designed to remotely manage multiple mobile network operator subscriptions and be compliant with GSMA specifications.

In various embodiments, the network 105 via which the navigation control system 101 and the vehicle 106 may communicate includes an access network which may be formed by E-UTRAN, which comprises multiple evolved base stations, which may be referred to herein as an eNodeB (eNB) or (e/g)NodeB. These evolved base stations may serve one or more cells to which UEs (e.g., the navigation control system 101, the vehicle 106) may connect. In various embodiments, the eNBs are configured to handle communications between the UEs and an evolved packet core (EPC) of the network 105. In addition to being connected to UEs and the EPC, each eNB is also connected to its nearby peers for the purpose of signaling and handover packet forwarding, in various examples. While each UE can belong to only one cell and communicate with only one eNB at a time, a handover can be efficiently performed whenever the UE moves to a new cell (e.g., as the vehicle 106 travels along a navigation path that may span over different cells).

In various embodiments, the EPC of the network 105 forms a core network and can contain entities such as a Home Subscriber Server (HSS), a Packet Data Network Gateway (PGW), a Serving Gateway (SGW) and a Mobility Management Entity (MME). The HSS is a central database for information related to users and subscriptions and is queried by the MME, which is responsible for control plane operations and UE authentication. Each UE is assigned their own SGW, which handles the routing, forwarding and buffering of packets. Meanwhile, the PGW handles IP address allocation for UEs and performs all IP packet operations required for the connections towards a Packet Data Network (PDN).

One of the technical advantages enabled through an embodiment of the network 105 as a cellular network (e.g., in accordance with LTE, 5G) is the capability to use spatial multiplexing with a Multiple Input Multiple Output (MIMO) technique. With the MIMO technique, both a sender and receiver may use multiple antennas simultaneously to transfer multiple data streams, increasing the bandwidth of the link and latency is decreased, especially in 5G. To enable this, the navigation control system 101 and the vehicle 106 may each comprise multiple antennas, in various embodiments.

In various embodiments, the network 105 comprises a 5G network, which may include multiple radio interfaces, namely below 6 GHz, cm Wave and mm Wave. In various embodiments, 5G can be integrated with existing legacy radio access technologies, such as LTE. Integration with the LTE may be implemented with macro coverage being provided by LTE and 5G radio interface access coming from small cells through LTE aggregation. In other words, the network 105 may support both inter-RAT operability (such as LTE-5G) and inter-RI operability (inter-radio interface operability, such as below 6 GHz-cm Wave, below 6 GHz-cm Wave-mm Wave). In various embodiments, the network 105 is configured for network slicing (e.g., in accordance with 5G) in which multiple independent and dedicated virtual sub-networks (network instances) may be created within the same infrastructure to run services that have different requirements on latency, reliability, throughput and mobility.

In various embodiments, the network 105 may be configured for multi-access edge computing (MEC) in accordance with 5G, enabling analytics and knowledge generation to occur at the source of the data. Accordingly, in some examples, resources that may not be continuously connected to a network such as laptops, smartphones, tablets and sensors may be leveraged. MEC provides a distributed computing environment for application and service hosting and has the ability to store and process content in close proximity to cellular subscribers for faster response time. Generally, edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (e.g., autonomous vehicles, traffic safety, real-time analytics, time-critical control, healthcare applications), each of which may be applied in various embodiments described herein.

In some embodiments, the navigation control system 101 is configured to determine or estimate a location of a vehicle 106. In some example instances, the navigation control system 101 determines a location of a vehicle 106 based at least in part on receiving a location from the vehicle 106, the vehicle 106 having positioning circuitry (e.g., Global Navigation Satellite System or GNSS circuitry, GPS circuitry, BeiDou navigation system circuitry, cellular network) configured to determine a location of the vehicle 106. In some other example instances, the navigation control system 101 determines a location of a vehicle 106 based at least in part on receiving data from which a location can be computed. For example, the navigation control system 101 receives data including transitionary data, such as a velocity and direction of the vehicle 106, and determines a location using the transitionary data, a previously-determined location, and an elapsed time period.

As discussed, determination or estimation of a location of the vehicle 106 may be associated with some degree of error, inaccuracy, confidence, and/or the like; in some examples, this may result in the vehicle 106 inadvertently and unknowingly (e.g., to the vehicle 106 and/or to the navigation control system 101) trespass into a constraint area if the vehicle 106 travels near the constraint area. Accordingly, various embodiments provide buffer-aware navigation to ensure that navigation paths determined for the vehicle 106 are positioned sufficiently far from constraint areas (e.g., via threshold distances or buffers) and further to appropriately steer a vehicle 106 away from constraint areas if they are positioned near the constraint areas (e.g., within threshold distances or buffers).

In order to determine navigation paths in accordance with buffer-aware navigation, the navigation control system 101 may be configured to store, retrieve, receive, access, and/or the like information associated with an environment and one or more constraint areas thereof (e.g., positioned within, defining and surrounding the environment). For example, the vehicle 106 travels within an environment (e.g., a permitted flight area, a defined mission area, a mapped road), and the navigation control system 101 is configured to identify one or more constraint areas (e.g., No-Fly-Zones, physical barriers or objects, flight paths of other vehicles, stationary vehicles) within and/or defining the environment. Specifically, the navigation control system 101 is configured to identify coordinates of a constraint area, borders of a constraint area, and/or the like. In this regard, the navigation control system 101 is also configured to access, store, and/or reference one or more digital maps with coordinate or reference systems, such that the navigation control system 101 can process relative locations and distances between waypoints and/or constraint areas.

Further, the navigation control system 101 is configured for performing one or more pathfinding techniques. For example, the navigation control system 101 comprises a pathfinding module, path planning circuitry, and/or the like configured for performing operations to optimize different paths between a set or a sequence of waypoints. For example, the navigation control system 101 is configured for performing operations in accordance with Dijkstra's algorithm, the A* algorithm, the sample algorithm, brute force methods, and/or the like. Specifically, the navigation control system 101 may be configured to perform pathfinding techniques using a visibility graph and to determine navigation paths that extend through nodes of the visibility graph, in various embodiments.

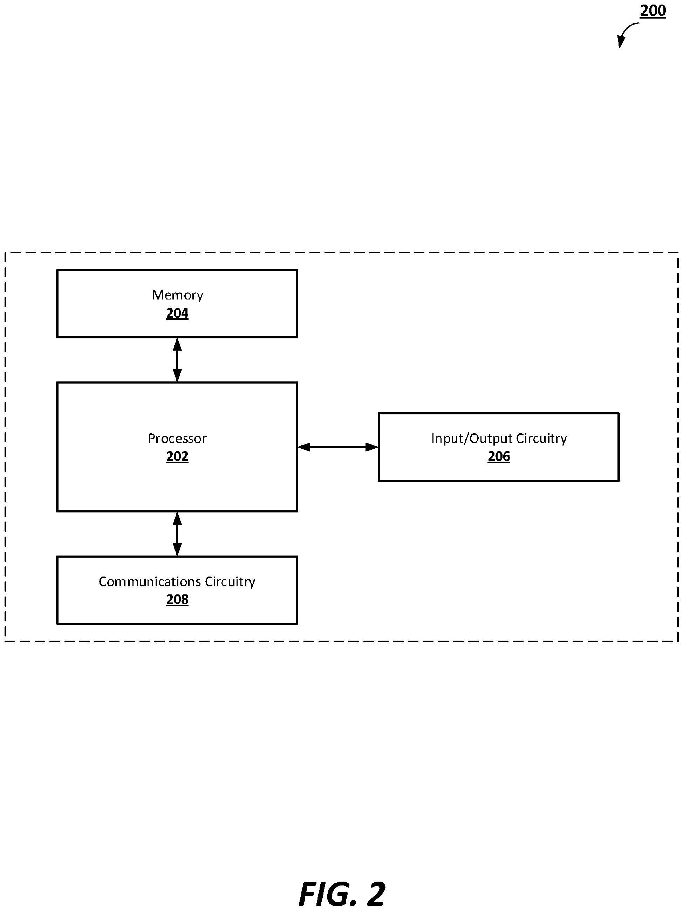

The navigation control system 101 may embody one or more computing systems, such as apparatus 200 shown in Figure 2. The apparatus 200 may include processor 202, memory 204, input/output circuitry 206, and communications circuitry 208. The apparatus 200 may be configured to execute the operations described herein. Although these components 202-208 are described with respect to functional limitations, it should be understood that the particular implementations necessarily include the use of particular hardware. It should also be understood that certain of these components 202-208 may include similar or common hardware. For example, two sets of circuitries may both leverage use of the same processor, network interface, storage medium, or the like to perform their associated functions, such that duplicate hardware is not required for each set of circuitries.

In some embodiments, the processor 202 (and/or co-processor or any other processing circuitry assisting or otherwise associated with the processor) may be in communication with the memory 204 via a bus for passing information among components of the apparatus. The memory 204 is non-transitory and may include, for example, one or more volatile and/or non-volatile memories. In other words, for example, the memory 204 may be an electronic storage device (e.g., a computer-readable storage medium). The memory 204 may be configured to store information, data, content, applications, instructions, or the like for enabling the apparatus to carry out various functions in accordance with an example embodiment disclosed herein.

The processor 202 may be embodied in a number of different ways and may, for example, include one or more processing devices configured to perform independently. In some embodiments, the processor 202 may include one or more processors configured in tandem via a bus to enable independent execution of instructions, pipelining, and/or multithreading. The use of the term "processor" may be understood to include a single core processor, a multi-core processor, multiple processors internal to the apparatus, and/or remote or "cloud" processors.

In some embodiments, the processor 202 may be configured to execute instructions stored in the memory 204 and/or circuitry otherwise accessible to the processor 202, such as interactions for various operations for providing buffer-aware navigation for a vehicle 106 such that the vehicle 106 respects constraint areas during navigation. In some embodiments, the processor 202 may be configured to execute hard-coded functionalities. As such, whether configured by hardware or software methods, or by a combination thereof, the processor 202 may represent an entity (e.g., physically embodied in circuitry) capable of performing operations according to an embodiment disclosed herein while configured accordingly. Alternatively, as another example, when the processor 202 is embodied as an executor of software instructions, the instructions may specifically configure the processor 202 to perform the algorithms and/or operations described herein when the instructions are executed.

In some embodiments, the apparatus 200 may include input/output circuitry 206 that may, in turn, be in communication with processor 202 to provide output to a user and/or other entity and, in some embodiments, to receive an indication of an input. The input/output circuitry 206 may comprise a user interface and may include a display, and may comprise a web user interface, a mobile application, a query-initiating computing device, a kiosk, or the like. In some embodiments, the input/output circuitry 206 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 204, and/or the like).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network. For example, the communications circuitry 208 may include one or more network interface cards, antennae, buses, switches, routers, modems, and supporting hardware and/or software, or any other device suitable for enabling communications via a network. Additionally, or alternatively, the communications circuitry 208 may include the circuitry for interacting with the antenna/antennae to cause transmission of signals via the antenna/antennae or to handle receipt of signals received via the antenna/antennae. As discussed, communications circuitry 208 comprises circuitry configured for communication via LTE networks and/or circuitry configured for communication via new radio (e.g., NR, 5G) networks, in various embodiments.

It is also noted that all or some of the information discussed herein can be based on data that is received, generated and/or maintained by one or more components of apparatus 200. In some embodiments, one or more external systems (such as a remote cloud computing and/or data storage system) may also be leveraged to provide at least some of the functionality discussed herein.

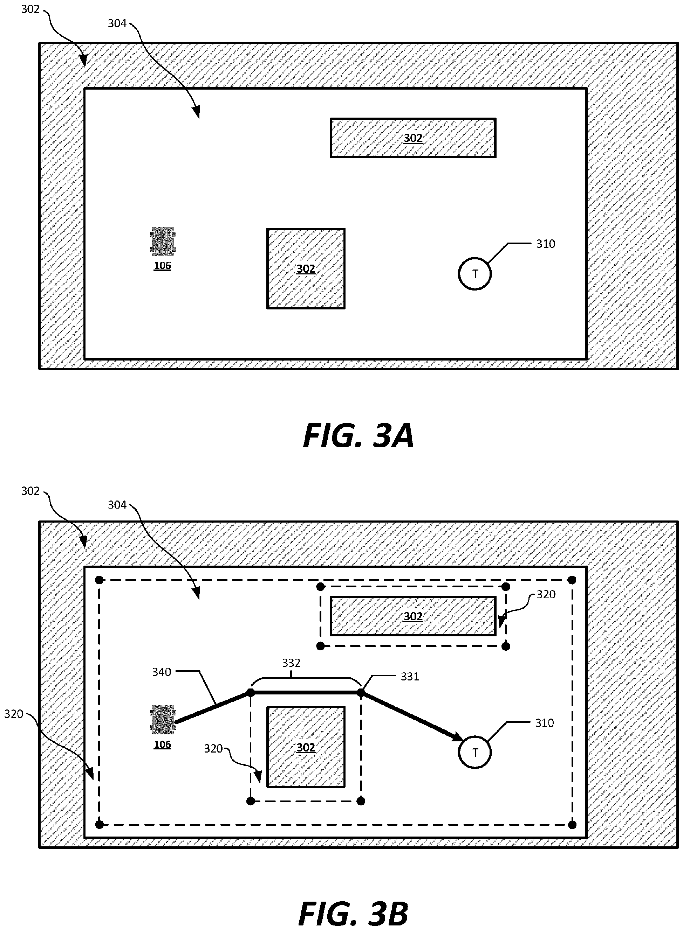

Example operations performed for providing buffer-aware navigation are now discussed in the context of Figures 3A-B. Figure 3A illustrates an example illustrative and non-limiting scenario in which a target location 310 has been specified as a destination for a vehicle 106. As illustrated in Figure 3A, various constraint areas 302 may be positioned near and surrounding the vehicle 106. In some examples, such as the illustrated embodiment, the vehicle 106 may be positioned within a permitted zone 304 that is defined, surrounded, and enclosed by constraint areas 302. While the permitted zone 304 may be a rectangular polygon in the illustrated embodiment, it will be understood that the permitted zone 304 may be mapped as any type of polygon with any dimension. In some examples, the permitted zone 304 may be a road on which the vehicle is positioned, a defined mission area within which the vehicle may fly, and/or the like. The permitted zone 304 may generally refer to areas within which the vehicle 106 is permitted to be positioned and to travel. In some other non-limiting examples, a permitted zone 304 may not be defined (e.g., by constraint areas 302), and travel and positioning of the vehicle 106 may not be enclosed, bounded, or restricted.

As shown in the illustrated embodiment of Figure 3A, individual constraint areas 302 may be positioned within the permitted zone 304. As discussed, these constraint areas 302 positioned within the permitted zone 304 further constrain the permitted zone 304 and indicate areas from which the vehicle 106 is precluded, prevented, restricted, and/or the like. In some examples, a constraint area 302 may be a No-Fly Zone controlled by a party not associated with the vehicle 106, for example, or may be another vehicle or object with which the vehicle 106 should not collide. Again, while constraint areas 302 may be illustrated in various figures as rectangular polygons, it will be understood that constraint areas 302 may have any suitable shape (e.g., two-dimensional, three-dimensional) to suitably represent an area from which the vehicle 106 is restricted.

Thus, as shown in Figure 3A, various constraint areas 302 may exist in the vicinity of the vehicle 106 and the target location 310, and a navigation path determined for the vehicle 106 to travel to the target location 310 preferably does not intersect with any constraint area 302. In some examples, it may be preferable to determine navigation paths to the target location 310 that have minimized path length and minimize detouring, and as a result, the determined navigation paths may approach near a constraint area 302. As discussed, this result may cause vehicles 106 travelling along the determined navigation paths to inadvertently and/or unknowingly trespass into a constraint area 302 to due deviations from the navigation paths (e.g., due to positioning errors and inaccuracies of a positioning system that may be used by the vehicle 106 and/or the navigation control system 101).

Accordingly, in various embodiments, threshold distances or buffers 320 may be defined for each constraint area 302, as demonstrated in Figure 3B. Specifically, in various embodiments, a buffer 320 for a constraint area 302 may define a threshold distance away from the constraint area 302 and may then encompass or surround the constraint area 302. While example buffers 320 illustrated in Figure 3B define a uniform threshold distance to each side of the constraint areas 302, the buffers 320 may be defined with different threshold distances and shapes in order to encompass or surround respective constraint areas 302. For instance, in some embodiments, a constraint area 302 may represent a moving object (e.g., another vehicle), and a corresponding buffer 320 may be defined based at least in part on the velocity of the moving object; for example, the buffer 320 may define an increased threshold distance proportional to the speed of the moving object in the direction of the moving object (e.g., at the front of a forward-moving vehicle).

In various embodiments, the buffer 320 for a constraint area 302 may define a threshold distance from the constraint area 302 based at least in part on a degree of error, inaccuracy, and/or confidence of positioning estimates for the vehicle 106. For example, a determined or estimated position of the vehicle 106 (e.g., by the vehicle 106 itself, by the navigation control system 101) may be associated with a distance error range or a confidence region with a specific diameter or width. Accordingly, in some example embodiments, the buffer 320 may be defined to be at least the distance error range or confidence region diameter/width away from the constraint area 302 such that, if the vehicle 106 is positioned exactly at the buffer 320 and the distance error is maximized, the vehicle 106 is not positioned within the constraint area 302 encompassed by the buffer 320.

A buffer 320 may additionally be defined for the constraint area 302 defining and enclosing the permitted zone 304. As discussed, the buffer 320 may define a threshold distance away from the constraint area 302 and accordingly may extend into and within the permitted zone 304, as illustrated in Figure 3B.

As also illustrated in Figure 3B, buffers 320 for constraint areas 302 may be specifically defined by nodes 331 of a visibility graph. In an example embodiment, nodes 331 of the visibility graph are defined and positioned at least a threshold distance away from constraint areas 302, thereby defining a buffer 320 for each constraint area 302. In the illustrated embodiment, nodes 331 of the visibility graph may be positioned to serve as vertices that define a polygon of a buffer 320 (e.g., a rectangular polygon encompassing a rectangular constraint area 302). Alternatively, in some embodiments, a buffer 320 for a constraint area 302 may be defined (e.g., based at least in part on a velocity associated with the constraint area 302, on a positioning error or inaccuracy associated with the vehicle 106), and the vertices of the resulting buffer 320 are used as nodes 331 of a visibility graph.

The nodes 331 of the visibility graph may be connected via edges 332, and as a result, some edges 332 may define a border for buffers 320. In various embodiments, the visibility graph then comprises a plurality of (e.g., all) possible shortest paths in the area around the constraint areas 302 through its nodes 331 and edges 332.

The visibility graph may include additional nodes 331 positioned throughout the space outside of the various buffers 320 and constraint areas 302. In some examples, the visibility graph may include nodes 331 arranged in a grid-like fashion, with some nodes 331 being uniformly spaced and arranged. In any regard, the nodes 331 and edges 332 of the visibility graph are positioned at least a threshold distance away from each constraint area 302, in various embodiments. Therefore, a visibility graph space can be defined as a space outside of the buffers 320 of the various constraint areas 302, and any location within the visibility graph space can be mapped to a nearby node 331 for pathfinding. Such pathfinding may then involve connecting various nodes 331, including a mapped node 331 nearby a starting location and another mapped node 331 nearby a specific destination, via edges 332 to form a navigation path, and the various nodes 331 that are connected may be selected in accordance with various pathfinding algorithms, such as Dijkstra's algorithm, the A* algorithm, and/or the like.

Thus, with at least some nodes 331 of the visibility graph being co-located with vertices of the buffers 320 for constraint areas 302 and positioned at least a threshold distance away from constraint areas, navigation paths determined through the visibility graph may be sufficiently far from constraint areas 302 such that the vehicle 106 travelling along the navigation paths may not inadvertently and/or unknowingly trespass into any constraint areas 302. As shown in the illustrated embodiment, an example navigation path 340 is determined to guide the vehicle 106 to the target location 310. The example navigation path 340 begins at the vehicle's location, or a mapped node 331 near the vehicle's location (not explicitly illustrated), extends to a node 331 co-located with a buffer vertex, extends along an edge 332 defining a portion of a buffer border to another node 331 co-located with another buffer vertex, and finally extends to the target location 310, or a mapped node 331 near the target location 310 (not explicitly illustrated). Again, by tracing along or near a buffer 320, a path length of the example navigation path 340 is reduced (e.g., minimized), and with the buffer 320, a vehicle 106 may maintain at least a threshold distance away from the respective constraint area 302.

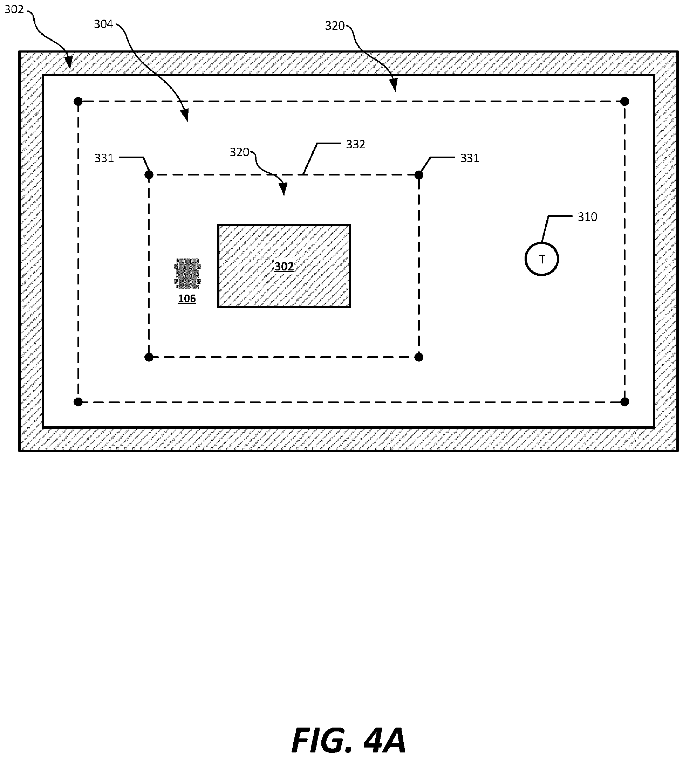

While pathfinding may be performed using a visibility graph between locations within a visibility graph space (e.g., a space outside of buffers 320 of constraint areas 302), a vehicle 106 may occasionally be positioned within a buffer 320, within a constraint area 302, and/or otherwise not within the visibility graph space. In example instances, the vehicle 106 may have inadvertently travelled into a buffer 320 and/or a constraint area 302 due to positioning errors or inaccuracies, manual operation, malfunctions and faults, and/or the like, and in some examples, difficulties arise in determining a navigation path through nodes 331 of a visibility graph, with the vehicle 106 not being within the visibility graph space. This scenario is illustrated in Figure 4A, in which a vehicle 106 is positioned within a buffer 320 of a constraint area 302. Due to the vehicle's location within the buffer 320, existing pathfinding logic or algorithms may not be capable of determining a navigation path. However, buffer-aware navigation provided by various embodiments described herein address these challenges and is configured to determine a navigation path for and to guide the vehicle 106 out of the buffer 320 and the to the target location 310.

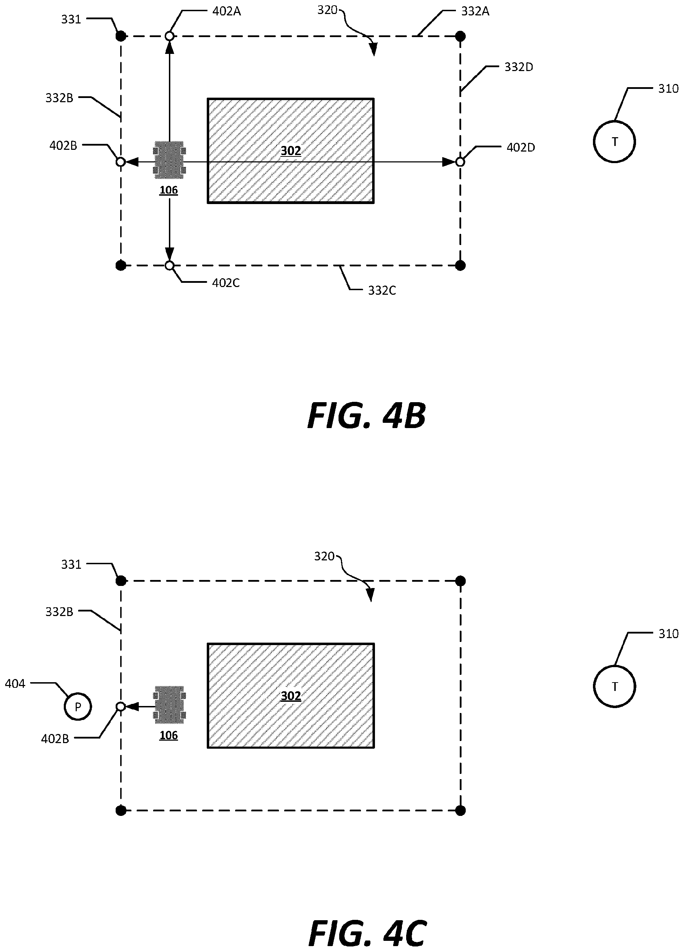

Figures 4B-D illustrate example operations that may be performed to provide buffer-aware navigation for a vehicle 106 that is positioned within a buffer 320 and having a location that is not able to be connected (e.g., unconnectable) to a visibility graph. Referring first to Figure 4B, the location of the vehicle 106 may be projected to a border defining the buffer 320 within which the vehicle is positioned. In the illustrated embodiment, the buffer 320 is defined as having a polygonal shape, and the border defining the buffer 320 includes a corresponding number of edges. In various embodiments, the vehicle's location is then projected to each edge of the border defining the buffer 320. For example, in the illustrated embodiment, the vehicle's location is projected to a projection point 402A-402D for each of the four edges of the border defining the buffer 320. It may be appreciated that, in an example embodiment in which the visibility graph includes nodes 331 positioned at the vertices defining the buffer 320, the border defining the buffer 320 is composed of edges 332 of the visibility graph. In various embodiments, the projection of the vehicle's location to an edge defining the buffer 320 may be substantially normal or perpendicular to the edge. By being substantially normal or perpendicular, for example, the projection of the vehicle's location to an edge forms between an approximately 75 to an approximately 105 degree angle, such as an approximately 80 to an approximately 100 degree angle. By being substantially normal or perpendicular in other embodiments, for example, the projection of the vehicle's location to an edge forms between an approximately 85 to an approximately 95 degree angle, such as an approximately 88 to an approximately 92 degree angle with the edge. In some examples, the buffer 320 within which the vehicle is positioned may be or may include portions that are circular, elliptic, ovular, and/or the like. In such examples, the vehicle's location may be projected to various arc lengths or segments of the border defining the buffer 320 in a radial manner.

Subsequently, as shown in Figure 4C, a particular projection and associated edge defining the buffer 320 may be selected based at least in part on the length of the particular projection. In particular, the projection having the shortest length may be selected. In the illustrated embodiment, the projection of the vehicle's location to the leftmost edge (e.g., edge 332B) at the projection point 402B is the shortest out of the four projections, for example. As will be appreciated, due the buffer 320 surrounding a respective constraint area 302, the shortest projection may not intersect with the respective constraint area 302. For example, in Figure 4B, while the projection to the projection point 402D on the rightmost edge intersects with the constraint area 302 in the illustrated embodiment, this projection has the longest length out of the four projections and would not be selected. In some example embodiments, a particular projection is selected from a subset of projections that do not intersect with the constraint area 302.

In various embodiments, the edge associated with the shortest projection, for example, is then used to generate a projected location 404 for the vehicle 106 within the visibility graph space; that is, the projected location 404 for the vehicle 106 is connectable with nodes 331 of the visibility graph. As illustrated in Figure 4C, the projected location 404 for the vehicle 106 is generated to be positioned outside of the buffer 320 and thereby within the visibility graph space. In some example embodiments, the projected location 404 may be taken as the projection point 402B, which is also in the visibility graph space and may be co-located with and/or intersected by an edge of the visibility graph. In various other example embodiments, including the illustrated embodiment, the projected location 404 may be positioned opposite the vehicle's location across the edge associated with the shortest projection by a configurable distance; that is, the projected location 404 may be separated from the buffer 320 by the configurable distance. In some example embodiments, the projected location 404 is a reflection of the vehicle's location across the edge, and distance between the projected location 404 and the buffer 320 is the same as and/or proportional to the length of the projection of the vehicle's location to the same edge. In some other example embodiments, the distance between the projected location 404 and the buffer 320 may be a defined constant, such as one meter for example. In any regard, it will be recognized that, due to selection of a projection based at least in part on its length, a distance between the vehicle's location to its projected location is appropriately reduced. The distance between the projected location 404 and the buffer 320 may depend on a type of navigation, a type of vehicle, a type of the map used, or a combination thereof, for example.

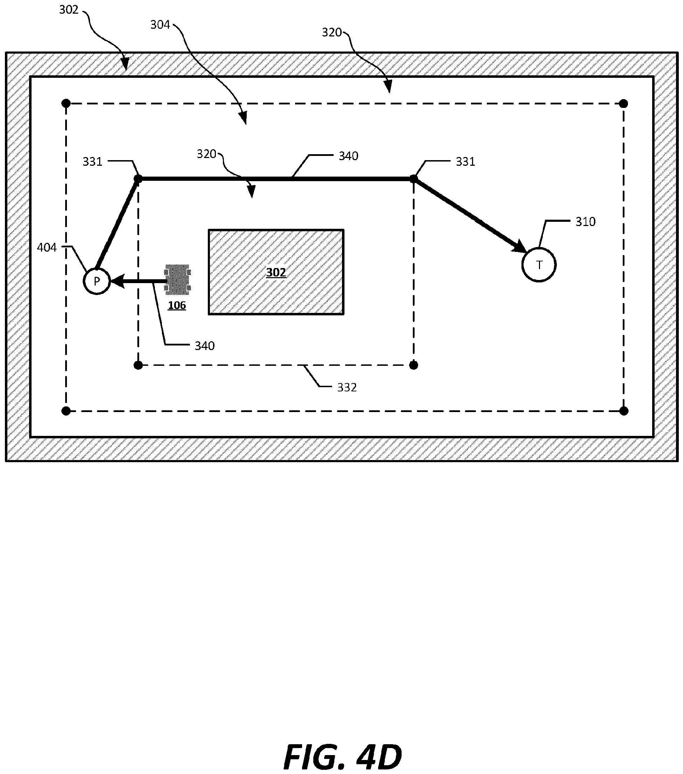

In various embodiments, a navigation path may then be determined to first guide the vehicle 106 to the projected location across the edge bordering the buffer 320 within which the vehicle 106 is presently positioned and then to the target location 310. Figure 4D illustrates an example navigation path 340 configured for navigation of the vehicle 106 to the target location 310. As illustrated, the navigation path 340 may include a first portion for navigation of the vehicle 106 from its present location to the projected location 404 that is connectable to nodes 331 of the visibility graph. As the shortest projection and the nearest edge may be selected for the generation of the projected location 404, the first portion of the navigation path 340 may be determined with a minimized path length, compared at least to paths from the vehicle's location to other edges defining the buffer 320.

The navigation path 340 may further include a second portion for navigation of the vehicle 106 from the projected location 404 to the target location 310 via nodes 331 and edges 332 of the visibility graph using pathfinding logic and algorithms. As previously discussed, pathfinding through the visibility graph may determine a navigation path with minimized path length, and thus, the second portion of the navigation path 340 that is determined using the visibility graph may extend from the projected location 404 through nodes 331 positioned on the border of the buffer 320 to the target location 310. In some examples, the projected location 404 and the target location 310 are added as nodes 331 to the visibility graph to enable pathfinding. In some other examples, the projected location 404 and the target location 310 each may be mapped to nearby nodes 331 from which a navigation path may be determined.

Thus, in some examples, only the first portion of the navigation path 340 between the vehicle's present location and the projected location may extend within a buffer 320. In various embodiments, responsive to determination that the vehicle 106 has again ventured into a buffer 320 based at least in part on the navigation path 340 spanning along the border of the buffer 320, the aforementioned example operations may be repeated to guide the vehicle 106 to another projected location 404 outside of the buffer 320 and connectable to the visibility graph. That is, the location of the vehicle 106 may be monitored in real-time and responsive to determining that the location of the vehicle 106 is within the buffer 320 of a constraint area 302, the aforementioned example operations (e.g., including projection of the vehicle's location, selection of a projection based at least in part on its length, and generation of a projected location) may be performed such that the vehicle 106 may be promptly guided out of the buffer 320 and maintained in the visibility graph space. Accordingly, with real-time or near real-time monitoring and responsive buffer-aware navigation, the navigation path 340 determined for the vehicle 106 may dynamically update as the vehicle's location changes.

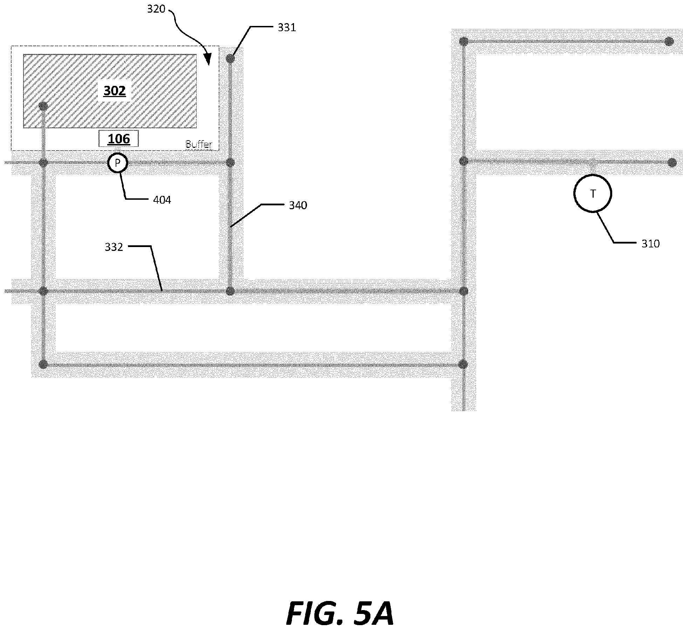

An example application of buffer-aware navigation as described in the context of Figures 3A-B and Figures 4A-D may involve parked cars on a road. Figure 5A illustrates an example scenario in which a car is parked to the side of a road, and accessible roads in the vicinity are mapped as edges 332 of a visibility graph that are connected via nodes 331. According to some embodiments, a constraint area 302 can be dynamically defined according to the parked location of the car (e.g., vehicle 106) and based at least in part on a desire for the car to depart from its parked location. In some examples, the constraint area 302 may be pre-defined and may represent a building near which the car is parked, with a corresponding buffer representing a pedestrian area (e.g., a sidewalk), for example. In such example scenarios, the car must first be transferred to the road, and thus, a projected location 404 is generated in the adjacent road (e.g., edge 332, a road segment, a particular lane). Further nodes 331 and edges 332 (e.g., road segments) may be selected based at least in part on a target location 310 for the vehicle 106, and as a result, the car is first guided to the road and then to its target location 310.

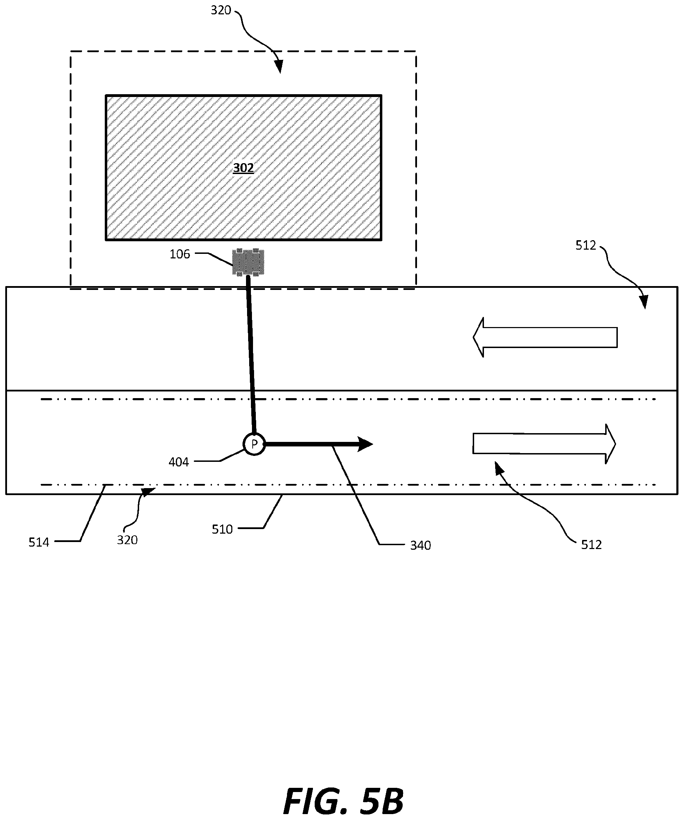

Figure 5B provides additional detail of the example scenario of Figure 5A and of the buffer-aware navigation of the vehicle 106. As described above, the vehicle 106 may be positioned within a constraint area 302 and/or within a buffer 320. For example, the vehicle 106 is parked to the side of a road, parked in a driveway, parked in an elevated or underground location off the road, and/or the like, and buffer-aware navigation is performed to navigate the vehicle 106 back to the road for travel to a target location.

As discussed throughout the present disclosure, the projected location 404 can be generated and positioned beyond the threshold distance or buffer 320 of the constraint area. Here, in the illustrated embodiment, a road segment 510 adjacent to the vehicle 106 and to be travelled by the vehicle 106 includes lanes 512 with different (e.g., opposite) directions of travel. In various embodiments, then, the projected location 404 is generated and positioned to appropriately guide the vehicle 106 to the appropriate lane 512 with a direction of travel conducive to travel to a specified target location. As shown in the illustrated example then, the projected location 404 is generated and positioned beyond the buffer 320 and in the center of a farther lane 512 with the desired direction of travel.

The illustrated embodiment demonstrates the threshold distance or buffer 320 for the constraint area 302 being defined to extend to an edge of the road segment 510 such that the projected location 404 is placed farther beyond the buffer 320 to account for the lane 512 with the undesired direction of travel. In other examples, as may be understood from Figure 5A, knowledge of travel directions of the lanes 512 can be used to dynamically define and/or re-adjust the threshold distance or buffer 320 to include and encompass lanes 512 with undesired travel directions. For example, in some examples, the buffer 320 may be extended to the center line of the road segment 510. As a result, placement of the projected location 404 beyond the re-defined buffer 320 or threshold distance is essentially guaranteed to be in a lane 512 with the appropriate direction of travel.

Accordingly, as demonstrated through Figure 5B, the specific positioning of the projected location 404 at a point beyond the threshold distance or buffer 320 can be based at least in part on lanes 512 of a road segment 500 and associated directions of travel. In various embodiments, buffer lines 514 may be defined and associated with a lane 512 of a road segment 510 in order to define buffers 320 within the lane 512. With these "lane-internal" buffers defined by the buffer lines 514, the projected location 404 is positioned within the lane 512 with a safe margin against inadvertently and erroneously trespassing into other lanes 512.

As another example (not explicitly illustrated in the figures), a car (e.g., embodied by the vehicle 106) may approach near a parked car (e.g., represented by a constraint area 302). Specifically, a car may approach within a threshold distance or a buffer 320 around the parked car from behind, in this example. In response and in accordance with buffer-aware navigation, a navigation path 340 may be determined to guide the parked car back out of the buffer 320 around the parked car by reversing (as reversing may be the shortest projection of the car's location out of the buffer 320) and then to guide the car around the parked car while maintaining the threshold distance or buffer 320 around the parked car to another target location 310, for example.

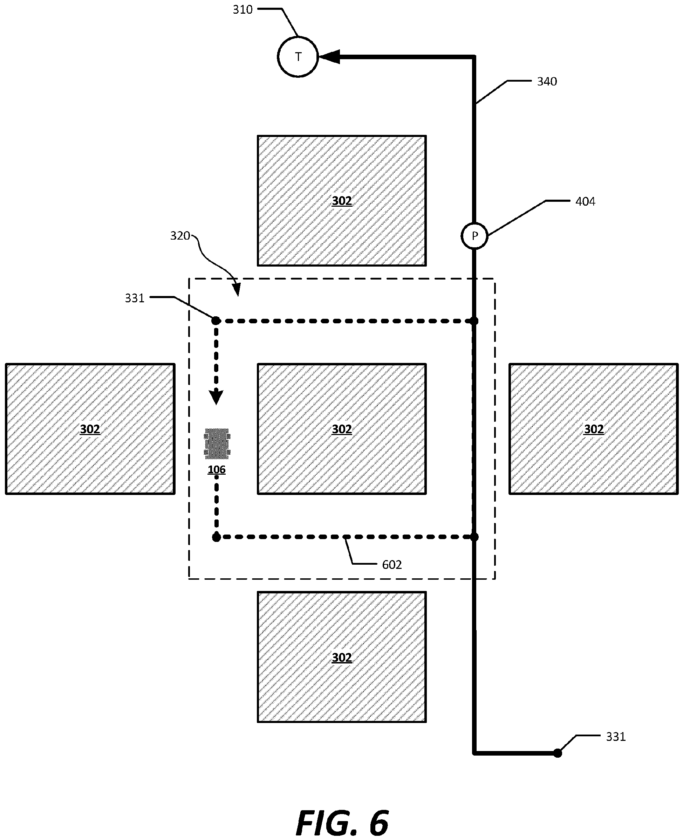

Another example application of buffer-aware navigation combined with real-time location monitoring of a vehicle 106 may involve detecting and breaking loops that may be repeatedly traveled by a vehicle 106, such as a car driving around a city block repeatedly. Figure 6 illustrates an example scenario in which buffer-aware navigation can be used to break a vehicle 106 traveling in a loop repeatedly. In the illustrated embodiment, the navigation control system 101 and/or the vehicle 106 may record historical movement 602 of the vehicle 106, and the historical movement 602 may show that the vehicle 106 has traveled along a loop repeatedly for some time. In one example, the navigation control system 101 and/or the vehicle 106 is configured to record previous travel up to a certain distance, such as the last fifty to two-hundred meters travelled, the last two-hundred to five-hundred meters travelled, the last one to five kilometers, and/or the like. Similarly, the navigation control system 101 and/or the vehicle 106 is configured to record one or more travelled locations (e.g., one or more waypoints or nodes). For example, repeated traveling of the vehicle 106 may be detected based at least in part on the vehicle 106 being present and/or near (e.g., within a particular radius of) a node 331 of a visibility graph at multiple (e.g., two or more) instances within a historical time period during historical movement 602. In the illustrated embodiment, the vehicle 106 has been travelling repeatedly through four nodes 331 of a navigation path 340 in a clockwise fashion. Generally, in various embodiments, the navigation control system 101 and/or the vehicle 106 are configured to automatically detect whether the vehicle 106 is repeatedly travelling within only a portion of the navigation path (e.g., erroneously travelling back and forth between only two nodes of the navigation path), travelling within a confined and bounded geographic area, and/or the like.

Repeated patterns in historical movement 602 of the vehicle 106 may trigger buffer-aware navigation to be performed such that the vehicle 106 may depart from the repeated pattern and reach a target location 310, and the navigation control system 101 may be configured to provide alternatives or options for escaping repeated travelling of the vehicle 106. In various embodiments, the historical movement 602 of the vehicle 106 can be encompassed-due to its repeated patterns-within some area, which can be embodied by a buffer 320 and/or a constraint area 302. That is, in various embodiments, agitation and exit from repeated historical movement that is confined within an area (e.g., an urban canyon) is enabled through defining the area as a buffer 320 and/or a constraint area 302. Then, in accordance with various embodiments described herein, a projected location 404 can be generated outside of the buffer 320, or the area repeatedly travelled by the vehicle 106. Using the projected location 404, the vehicle can break out of the dynamically defined constraint area (e.g., the repeatedly travelled portion of the navigation path) and proceed along the navigation path to the target location 310.

In these example scenarios, the projected location 404 may be generated based at least in part on various criteria. The projected location 404 may be generated close to and/or along the original navigation path, as is shown in Figure 6. Alternatively, the projected location 404 may be generated and positioned to minimize variation between the resulting navigation path and the original navigation path. Further, the projected location 404 may be generated and positioned to minimize the number of additional segments added to form the resulting navigation path. In some examples, a projected location 404 may be generated opposite to a portion of the historical movement 602 that is nearest the target location 310. As such, the vehicle 106 can be broken out of a loop with the area spanned by the loop being defined as a buffer 320 for buffer-aware navigation, in various example embodiments.

In some instances, repeated travel of the vehicle 106 may be a result of erroneous satellite positioning data, and generation and positioning of the projected location 404 may be performed using interpolated data instead. For example, the vehicle 106 may be repeatedly travelling within an urban canyon in which satellite positioning data may be unreliable and at least part of the cause of repeated travel within the urban canyon. In some example, tunnel-type interpolation algorithms may be used in generating and positioning the projected location 404. The input data for tunnel-type interpolation algorithms may have been collected from the vehicles which have had same problems earlier (e.g., vehicles travelling along the same navigation path and having erroneous repeated travel behavior). Such data may include speed, location and/or path data, for example, during the problematic and erroneous behavior.

Generally, while various embodiments have been described herein with respect to a vehicle 106 being positioned within a threshold distance or a buffer 320 of a constraint area 302, it should be understood that the target location 310 also should not be within a threshold distance or a buffer 320 of a constraint area 302. In various embodiments, the target location 310 may be selected via user input at the navigation control system 101, and the navigation control system 101 may be configured to provide feedback to a user if the user specifies a target location 310 within a threshold distance or a buffer 320 of a constraint area and may be further configured to prompt the user to select another target location 310. In some example embodiments, the target location 310 may indeed be within a threshold distance or a buffer 320 of a constraint area 302, and if so, the vehicle 106 may be first guided to a projected target location generated in accordance with various embodiments described herein and then may be subsequently guided directly to the target location 310 within the threshold distance or buffer 320 of the constraint area 302.

As previously discussed, buffer-aware navigation can be applied in three-dimensional spaces with constraint volumes (e.g., analogous to constraint areas 302) and buffer volumes encompassing the constraint volumes. In such examples, the vehicle's location may be projected to different faces or portions of a surface area defining a buffer volume, and a projected location 404 may be generated similarly to the above-described embodiments. A navigation path may then be determined and may include a first portion from the vehicle's location to the projected location 404 and a second portion extending through a three-dimensional visibility graph space. Additionally, while the two-dimensional scenarios illustrated in Figures 3A-B, Figures 4A-D, Figures 5A-B, and Figure 6 may be understood as a top-down plan view, the same two-dimensional scenarios are not limited to such interpretations and can also be understood as a side elevation view.

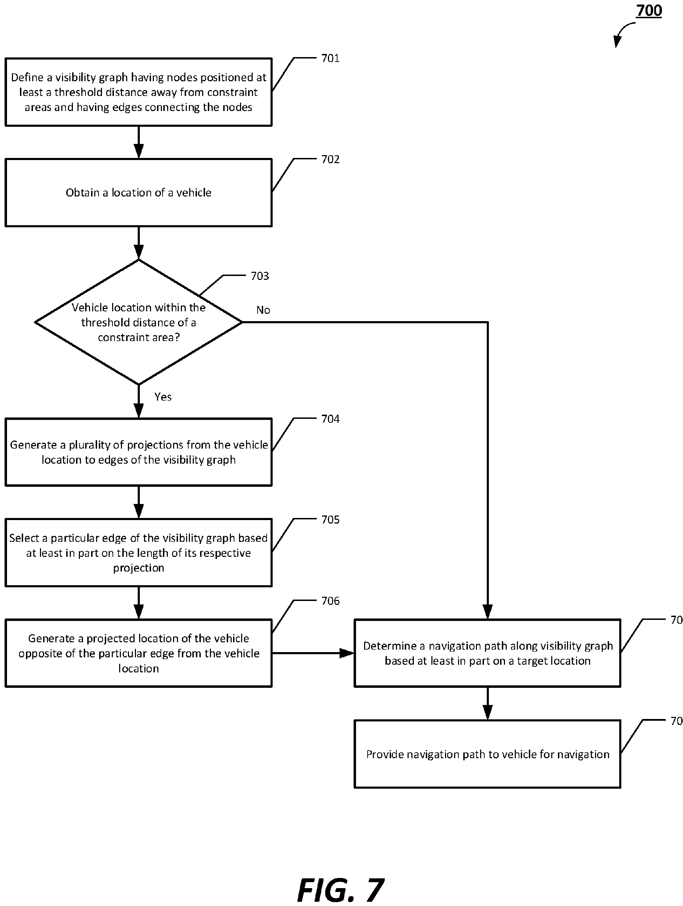

Referring now to Figure 7, a flowchart 700 is provided. The flowchart 700 illustrates example operations that are performed by the apparatus 200 (e.g., when embodied by the navigation control system 101), in some example embodiments. In particular, the flowchart 700 includes various operations performed by the apparatus 200 for providing buffer-aware navigation for a vehicle 106 such that the vehicle 106 does not trespass into or violate constraint areas 302 and such that the vehicle 106 can be efficiently guided at least a threshold distance away from a constraint area 302 (e.g., out of a buffer of the constraint area 302).

As shown, at operation 701, the apparatus 200 includes means, such as processor 202, memory 204, and/or the like, for defining a visibility graph having nodes positioned at least a threshold distance away from constraint areas and having edges connecting the nodes. As previously described, the visibility graph comprises a plurality of, such as all, possible shortest paths in the area that respect the threshold distance or the buffers 320 of constraint areas 302 through the visibility graph's nodes 331 being positioned at and/or outside the threshold distance or the buffers 320 of the constraint areas 302. Various example nodes 331 of an example visibility graph are illustrated in Figures 3B and Figures 4A-D. As shown in these figures, the edges 332 of the visibility graph that connect the nodes 331 may be used to determine and form navigation paths. In various embodiments, the edges 332 of the visibility graph are specifically defined between nodes 331 that are visible to each other. As a result, two nodes between which a constraint area 302 is positioned may not be connected via an edge 332, as the two nodes are not visible to each other.

At operation 702, the apparatus 200 includes means, such as processor 202, memory 204, communications circuitry 208, and/or the like, for obtaining a location of a vehicle 106. In various embodiments, the vehicle 106 comprises positioning circuitry (e.g., GPS circuitry, circuitry for determining a position via a cellular network) and may provide location data including coordinates to the apparatus 200. That is, the apparatus 200 may receive a location from the vehicle 106, for example via communications circuitry 208. In various other embodiments, the apparatus 200 receives data, which may include transitionary data, from the vehicle 106, and uses the data to determine a location for the vehicle 106. For example, the apparatus 200 receives a velocity and orientation from the vehicle 106 and stores a previous location of the vehicle 106, and the apparatus 200 determines a location for the vehicle 106 using at least the velocity, orientation, and the previous location. In yet another example, the apparatus 200 may be configured to track the vehicle 106 (e.g., via satellite tracking, via satellite imagery, via another vehicle 106) and may determine a location of the vehicle 106 accordingly. In various embodiments, the determined location of the vehicle 106 is a predicted location according to a configurable prediction time window. For example, the apparatus 200 determines a location that the vehicle 106 is predicted to be at subsequent to a prediction time window of five seconds. Determination and further use of a predicted location proves advantageous in improving accuracy, as delays arising from communication and various computing tasks and operations may result in a real-time location of the vehicle 106 being inaccurate and expired.

At operation 703, the apparatus 200 includes means, such as processor 202, memory 204, and/or the like, for determining whether the location of the vehicle 106 is within a threshold distance or a buffer 320 of a constraint area 302. In various embodiments, the apparatus 200 may be configured to store a digital map of the surrounding environment of the vehicle's location, with the digital map identifying various constraint areas 302. As previously discussed, the vehicle 106 may be positioned within a permitted zone 304 which is defined and surrounded by a constraint area 302, and other constraint areas 302 may also be positioned within the permitted zone 304. In such embodiments, the apparatus 200 may be configured to map the vehicle's location into the digital map and determine whether the vehicle's location is within a threshold distance of any constraint areas 302 and/or within a defined buffer 320 for any constraint areas 302.

Additionally or alternatively, the apparatus 200 may be configured to determine whether the location of the vehicle 106 is connectable with the defined visibility graph and/or whether the vehicle's location is within the visibility graph space. As mentioned, a vehicle location may be connectable with the defined visibility graph if the vehicle location is outside of a threshold distance or buffer of the constraint areas 302; thus, if it is determined that the vehicle's location cannot be connected to the visibility graph for pathfinding, then it may be determined that the vehicle 106 is positioned within the threshold distance or the buffer of a constraint area 302.

If the vehicle location is determined to be within the threshold distance or the buffer 320 of a constraint area 302, the apparatus may perform operation 704. At operation 704, the apparatus 200 includes means, such as processor 202, memory 204, and/or the like, for generating a plurality of projections from the vehicle location to edges of the visibility graph. Specifically, the plurality of projections may span from the vehicle location to edges defining the threshold distance or the buffer from the constraint area that the vehicle location is near. In various embodiments, each projection may be substantially normal or perpendicular to a respective edge. For example, a projection may be substantially normal or perpendicular to a respective edge by being between approximately 75 and approximately 105 degrees, between approximately 80 and approximately 100 degrees, such as between approximately 85 and approximately 95 degrees, and/or in one embodiment, between approximately 88 and approximately 92 degrees.

At operation 705, the apparatus 200 includes means, such as processor 202, memory 204, and/or the like, for selecting a particular edge of the visibility graph based at least in part on the length of its respective projection. Each of the plurality of projections spans a length representative of the distance between the vehicle location and a buffer-defining edge. In order to locate an exit from the buffer that is near the vehicle location, the edge may be selected based on the length of the corresponding projection. For example, the projection having the shortest length may be identified, and its corresponding edge may be selected for the exit of the vehicle 106 from the buffer 320.

At operation 706, the apparatus 200 includes means, such as processor 202, memory 204, and/or the like, for generating a projected location of the vehicle opposite of the particular edge from the vehicle location. Figures 4C-D illustrate a projected location 404 of a vehicle that is generated opposite or across the particular edge from the vehicle location. In various embodiments, the projected location 404 may be generated at a constant and/or configurable distance away from the particular edge. In other example embodiments, the projected location 404 may be generated at a distance the same as and/or proportional to the length of the projection to the particular edge. In various embodiments, the projected location 404 may be added as a node 331 of the visibility graph to enable a navigation path to be determined.

At operation 707, the apparatus 200 includes means, such as processor 202, memory 204, and/or the like, for determining a navigation path along the visibility graph based at least in part on a target location 310. In various embodiments, the target location 310 may also be added as a node 331 of the visibility graph, such that the target location can be connected to other nodes 331 via edges 332 of the visibility graph. When performed following operation 706, the navigation path 340 may be determined further based at least in part on the projected location 404 of the vehicle. Figure 4D illustrates an example navigation path 340. Specifically, the navigation path 340 may comprise a first portion extending directly from the vehicle location to the projected location 404. This first portion does not specifically span through a portion of the visibility graph, as the vehicle location is invisible, inaccessible, unconnectable, and/or the like to the visibility graph due to its position within the threshold distance or the buffer 320 of a constraint area 302. The navigation path 340 may then comprise a second portion extending through the visibility graph (e.g., the nodes 331 and the edges 332 thereof) from the projected location 404, which may be a node 331 of the visibility graph, to the target location 310, which may also be a node 331 of the visibility graph. Thus, the second portion of the navigation path 340 may be formed of edges 332 connecting selected intermediate nodes between the projected location 404 and the target location 310, with the intermediate nodes being selected in accordance with various pathfinding logic, algorithms, and/or strategies (e.g., to minimize a total path length of the navigation path 340).

Meanwhile, if the vehicle location is determined to be outside of the threshold distance or buffer 320 of the constraint area 302 at operation 703, operation 707 can also be performed; however, in such instances, the navigation path along the visibility graph is determined based at least in part on the vehicle location and the target location, without a projected location. Specifically, in such instances, the vehicle location can directly be added as a node 331 of the visibility graph since it is determined to be outside the threshold distance or buffer 320 of any constraint areas 302. Thus, a navigation path 340 can be determined via edges 332 of the visibility graph that directly connect the vehicle location, any selected intermediate nodes, and the target location 310.

At operation 708, the apparatus 200 includes means, such as processor 202, memory 204, input/output circuitry 206, communications circuitry 208, and/or the like, for providing the navigation path to the vehicle 106 for navigation. In various embodiments, providing the navigation path to the vehicle 106 comprises transmitting the various intermediate nodes selected for the navigation path 340 and/or the projected location 404 if the vehicle is positioned within the threshold distance or buffer 320 of a constraint area 302. Upon the navigation path 340 being provided to the vehicle 106, the vehicle 106 may be caused and/or commanded to travel according to the navigation path 340. In some examples, however, the navigation path 340 may be provided as a guide for the vehicle 106, such as to a user operating the vehicle 106 as a suggestion. In some example embodiments, the navigation path 340 may be overlaid on a map (e.g., a roadmap) for display to a user at the vehicle 106. In any regard, the navigation path 340 is provided to the vehicle 106 so that the vehicle 106 may travel without trespassing into constraint areas 302 and may exit out of a threshold distance or a buffer 320 for a constraint area 302 if originally positioned within the threshold distance or buffer 320.

As described above, operations, methods, apparatuses, and computer program products are disclosed for providing buffer-aware navigation for a vehicle 106. With various embodiments described herein, constraint areas remain respected due to establishing navigation paths through a visibility graph defined to be at least a threshold distance or a buffer away from constraint areas to account for potential positioning errors and inaccuracies of a positioning system. As such, a need for any remedial actions that arise from inadvertently violating a constraint area and/or remedial resources is obviated, thereby conserving processing and computing resources that may be otherwise used (e.g., by the navigation control system 101, by the vehicle 106) to handle and remediate the violation of a constraint area 302. Additionally, various embodiments provide improved applicability, as a navigation path can be determined for a vehicle positioned within the threshold distance or buffer of a constraint area without confounding pathfinding logic or algorithms for a visibility graph that may not be configured to determine navigation paths that venture into said threshold distance or buffer of constraint areas. That is, while a vehicle's location may not directly connect to a visibility graph for pathfinding purposes due to being within the threshold distance or buffer of a constraint area, various embodiments enable a navigation path to still be found to first guide the vehicle 106 sufficiently away from the constraint area and then to its target location. As such, applicability of visibility graph-based pathfinding has been expanded and improved through solutions provided by various embodiments described herein.

Some example implementations of path planning involve orchestrating teams of agents (e.g., physical entities such as robots or digital entities such as characters, avatars, etc.) in physical environments or in simulated digital worlds (e.g., video games) and planning complete and detailed paths for each agent, requiring that each agent very tightly and synchronously follow a designated path. A constraint area for an agent may be generated to some area or part of the designated path. In an example to proceed over the constraint area is to provide alternative ways or tasks to proceed the game, like providing projected location from the repeated travelled path to get out of the repeated travelled path to designated path, for example. A projected location may be a certain distance from the travelled path. An agent (e.g., a vehicle) may need, for example, to jump or throw an accessory to a certain distance from its present location to get out to the projected location which is in a safe location to continue the designed path. While the embodiments herein refer to the vehicles as real-world physical entities, it is to be appreciated that the operations discussed herein may be performed with other agents, such as digital entities in a virtual setting (e.g., video game characters and/or entities, entities within a simulation, and/or the like). In some examples, map data may be sampled randomly or discretized into grids or graphs that establish potential nodes among which the vehicles or digital entities in physical environments or in simulated digital worlds can traverse. An agent can be instructed by a user handheld device which may have sensors for movement control, an inertial measurement unit, an accelerometer, and/or the like, for example.

Figure 7 illustrates a flowchart depicting operations according to various embodiments of the present disclosure. It will be understood that each block of the flowchart and combination of blocks in the flowchart may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 204 of an apparatus employing an embodiment of the present disclosure and executed by a processor 202. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

Many modifications and other embodiments of the present disclosure set forth herein will come to mind to one skilled in the art to which present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims.

Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus (200) comprising:
means for defining a navigation path comprising a plurality of nodes (331), the navigation path further comprising a plurality of segments (332, 510) connecting the plurality of nodes;
means for obtaining a location of a vehicle (106);
means for, in accordance with a determination that the location of the vehicle is positioned within a threshold distance of at least one constraint area (302), generating a projected location (404) of the vehicle beyond the threshold distance away from the at least one constraint area;
means for generating an updated navigation path using at least the projected location of the vehicle; and
means for executing the updated navigation path for navigation of the vehicle, **characterized in that** the means for generating a projected location of the vehicle beyond the threshold distance away from the at least one constraint area comprises:
means for generating a plurality of projections from the obtained location of the vehicle to the plurality of segments;
means for selecting a particular segment based at least in part on a length of a respective projection; and
means for generating the projected location opposite of the particular segment from the obtained location of the vehicle.

2. The apparatus of claim 1, wherein the projected location of the vehicle is generated based at least in part on minimizing a distance between the projected location of the vehicle and the obtained location of the vehicle.

3. The apparatus of any of the preceding claims, wherein a projection of the plurality of projections is at least substantially normal to a respective segment.

4. The apparatus of any of the preceding claims, wherein the projected location is positioned opposite of the particular segment by a configurable distance based at least in part on an accuracy associated with the obtained location of the vehicle and/or the length of the respective projection.

5. The apparatus of any of the preceding claims, wherein the location of the vehicle is within a permitted zone defined by a surrounding constraint area, and wherein the plurality of nodes are positioned beyond the threshold distance interior from the surrounding constraint area and beyond the threshold distance exterior to one or more constraint areas positioned within the permitted zone.

6. The apparatus of any of the preceding claims, wherein the updated navigation path comprises a first portion spanning from the obtained location of the vehicle to the projected location and a second portion spanning from the projected location through one or more nodes and one or more segments of the first navigation path to a target location.

7. The apparatus of any of the preceding claims, wherein the updated navigation path is generated based at least in part on adding one or more segments to the navigation path to connect the projected location to the navigation path, wherein the one or more added segments are positioned beyond a threshold distance away from the at least one constraint area.

8. The apparatus of any of the preceding claims, wherein the one or more constraint areas include a constraint area dynamically defined based at least in part on confined and repeated historical movement of the vehicle.

9. The apparatus of any of the preceding claims, wherein the first navigation path is a visibility graph.

10. A method comprising:
defining (701) a navigation path comprising a plurality of nodes, the navigation path further comprising a plurality of segments connecting the plurality of nodes;
obtaining (702) a location of a vehicle;
in accordance with a determination that the location of the vehicle is positioned within a threshold distance of at least one constraint area, generating a projected location of the vehicle beyond the threshold distance away from the at least one constraint area;
generating (707) an updated navigation path using at least the projected location of the vehicle; and
executing the updated navigation path for navigation of the vehicle,
**characterized in that** the generating a projected location of the vehicle beyond the threshold distance away from the at least one constraint area comprises:
generating (704) a plurality of projections from the obtained location of the vehicle to the plurality of segments;
selecting (705) a particular segment based at least in part on a length of a respective projection; and
generating (706) the projected location opposite of the particular segment from the obtained location of the vehicle.

11. The method of claim 10, wherein the projected location of the vehicle is generated based at least in part on minimizing a distance between the projected location of the vehicle and the obtained location of the vehicle.

12. The method of claim 10 or claim 11, wherein a projection of the plurality of projections is at least substantially normal to a respective segment.

13. The method of any of claims 10 to 12, wherein the projected location is positioned opposite of the particular segment by a configurable distance based at least in part on an accuracy associated with the obtained location of the vehicle and/or the length of the respective projection.

14. The method of any of claims 10 to 13, wherein the one or more constraint areas include a constraint area dynamically defined based at least in part on confined and repeated historical movement of the vehicle.

15. A computer program product comprising a non-transitory computer readable storage medium having program code portions stored thereon, the program code portions configured, upon execution, to:
define a navigation path comprising a plurality of nodes, the navigation path further comprising a plurality of segments connecting the plurality of nodes;
obtain a location of a vehicle;
in accordance with a determination that the location of the vehicle is positioned within a threshold distance of at least one constraint area, generate a projected location of the vehicle beyond the threshold distance away from the at least one constraint area;
generate an updated navigation path using at least the projected location of the vehicle; and
executing the updated navigation path for navigation of the vehicle,
**characterized in that** the generating a projected location of the vehicle beyond the threshold distance away from the at least one constraint area comprises:
generating a plurality of projections from the obtained location of the vehicle to the plurality of segments;
selecting a particular segment based at least in part on a length of a respective projection; and
generating the projected location opposite of the particular segment from the obtained location of the vehicle.

## Patentansprüche

1. Vorrichtung (200), die Folgendes umfasst:
Mittel zum Definieren eines Navigationspfades, der eine Vielzahl von Knoten (331) umfasst, wobei der Navigationspfad ferner eine Vielzahl von Segmenten (332, 510) umfasst, die die Vielzahl von Knoten verbinden;
Mittel zum Erhalten eines Standorts eines Fahrzeugs (106);
Mittel zum Erzeugen eines projizierten Standorts (404) des Fahrzeugs über einen Schwellwertabstand hinaus von mindestens einem eingeschränkten Bereich weg gemäß einer Bestimmung, dass der Standort des Fahrzeugs innerhalb eines Schwellwertabstands von mindestens einem eingeschränkten Bereich (302) positioniert ist;
Mittel zum Erzeugen des aktualisierten Navigationspfades mindestens unter Verwendung des projizierten Standorts des Fahrzeugs; und
Mittel zum Ausführen des aktualisierten Navigationspfades zum Navigieren des Fahrzeugs,
**dadurch gekennzeichnet, dass** die Mittel zum Erzeugen eines projizierten Standorts des Fahrzeugs über den Schwellwertabstand hinaus weg von dem mindestens einen eingeschränkten Bereich Folgendes umfasst:
Mittel zum Erzeugen einer Vielzahl von Projektionen vom erhaltenen Standort des Fahrzeugs zu der Vielzahl von Segmenten;
Mittel zum Auswählen eines speziellen Segments mindestens teilweise auf Basis einer Länge einer jeweiligen Projektion; und
Mittel zum Erzeugen des projizierten Standorts gegenüber dem speziellen Segment vom erhaltenen Standort des Fahrzeugs.

2. Vorrichtung nach Anspruch 1, wobei der projizierte Standort des Fahrzeugs mindestens teilweise auf Basis des Minimierens eines Abstands zwischen dem projizierten Standort des Fahrzeugs und dem erhaltenen Standort des Fahrzeugs erzeugt wird.

3. Vorrichtung nach einem der vorhergehenden Ansprüche, wobei eine Projektion der Vielzahl von Projektionen mindestens im Wesentlichen senkrecht zu einem jeweiligen Segment verläuft.

4. Vorrichtung nach einem der vorhergehenden Ansprüche, wobei der projizierte Standort um einen auslegbaren Abstand mindestens teilweise auf Basis einer Genauigkeit, die mit dem erhaltenen Standort des Fahrzeugs verknüpft ist, und/oder der Länge der jeweiligen Projektion gegenüber dem speziellen Segment positioniert ist.

5. Vorrichtung nach einem der vorhergehenden Ansprüche, wobei der Standort des Fahrzeugs innerhalb einer zulässigen Zone liegt, die durch einen umgebenden eingeschränkten Bereich definiert ist, und wobei die Vielzahl von Knoten über den Schwellwertabstand hinaus innerhalb des umgebenden eingeschränkten Bereichs und über den Schwellwertabstand hinaus außerhalb von einem oder mehreren eingeschränkten Bereichen liegt, die innerhalb der zulässigen Zone positioniert sind.

6. Vorrichtung nach einem der vorhergehenden Ansprüche, wobei der aktualisierte Navigationspfad einen ersten Abschnitt, der sich vom erhaltenen Standort des Fahrzeugs zum projizierten Standort erstreckt, und einen zweiten Abschnitt, der sich vom projizierten Standort über einen oder mehrere Knoten und ein oder mehrere Segmente des ersten Navigationspfades zu einem Zielstandort erstreckt, umfasst.

7. Vorrichtung nach einem der vorhergehenden Ansprüche, wobei der aktualisierte Navigationspfad mindestens teilweise auf Basis des Hinzufügens von einem oder mehreren Segmenten zum Navigationspfad, um den projizierten Standort mit dem Navigationspfad zu verbinden, erzeugt wird, wobei das eine oder die mehreren hinzugefügten Segmente über einen Schwellwertabstand hinaus weg von dem mindestens einen eingeschränkten Bereich positioniert sind.

8. Vorrichtung nach einem der vorhergehenden Ansprüche, wobei der eine oder die mehreren eingeschränkten Bereiche einen eingeschränkten Bereich beinhalten, der mindestens teilweise auf Basis einer begrenzten und wiederholten historischen Bewegung des Fahrzeugs dynamisch definiert ist.

9. Vorrichtung nach einem der vorhergehenden Ansprüche, wobei der erste Navigationspfad ein Sichtbarkeitsgraph ist.

10. Verfahren, das Folgendes umfasst:
Definieren (701) eines Navigationspfades, der eine Vielzahl von Knoten umfasst, wobei der Navigationspfad ferner eine Vielzahl von Segmenten umfasst, die die Vielzahl von Knoten verbinden;
Erhalten (702) eines Standorts eines Fahrzeugs;
Erzeugen eines projizierten Standorts des Fahrzeugs über einen Schwellwertabstand hinaus von mindestens einem eingeschränkten Bereich weg gemäß einer Bestimmung, dass der Standort des Fahrzeugs innerhalb eines Schwellwertabstands von mindestens einem eingeschränkten Bereich positioniert ist;
Erzeugen (707) des aktualisierten Navigationspfades mindestens unter Verwendung des projizierten Standorts des Fahrzeugs; und
Ausführen des aktualisierten Navigationspfades zum Navigieren des Fahrzeugs,
**dadurch gekennzeichnet, dass** das Erzeugen eines projizierten Standorts des Fahrzeugs über den Schwellwertabstand hinaus weg von dem mindestens einen eingeschränkten Bereich Folgendes umfasst:
Erzeugen (704) einer Vielzahl von Projektionen vom erhaltenen Standort des Fahrzeugs zu der Vielzahl von Segmenten;
Auswählen (705) eines speziellen Segments mindestens teilweise auf Basis einer Länge einer jeweiligen Projektion; und
Erzeugen (706) des projizierten Standorts gegenüber dem speziellen Segment vom erhaltenen Standort des Fahrzeugs.

11. Verfahren nach Anspruch 10, wobei der projizierte Standort des Fahrzeugs mindestens teilweise auf Basis des Minimierens eines Abstands zwischen dem projizierten Standort des Fahrzeugs und dem erhaltenen Standort des Fahrzeugs erzeugt wird.

12. Verfahren nach Anspruch 10 oder Anspruch 11, wobei eine Projektion der Vielzahl von Projektionen mindestens im Wesentlichen senkrecht zu einem jeweiligen Segment verläuft.

13. Verfahren nach einem der Ansprüche 10 bis 12, wobei der projizierte Standort um einen auslegbaren Abstand mindestens teilweise auf Basis einer Genauigkeit, die mit dem erhaltenen Standort des Fahrzeugs verknüpft ist, und/oder der Länge der jeweiligen Projektion gegenüber dem speziellen Segment positioniert ist.

14. Verfahren nach einem der Ansprüche 10 bis 13, wobei der eine oder die mehreren eingeschränkten Bereiche einen eingeschränkten Bereich beinhalten, der mindestens teilweise auf Basis einer begrenzten und wiederholten historischen Bewegung des Fahrzeugs dynamisch definiert ist.

15. Computerprogrammprodukt, das ein nichttransitorisches computerlesbares Speichermedium aufweist, auf dem Programmcodeabschnitte gespeichert sind, wobei die Programmcodeabschnitte nach der Ausführung zu Folgendem ausgelegt sind:
Definieren eines Navigationspfades, der eine Vielzahl von Knoten umfasst, wobei der Navigationspfad ferner eine Vielzahl von Segmenten umfasst, die die Vielzahl von Knoten verbinden;
Erhalten eines Standorts eines Fahrzeugs;
Erzeugen eines projizierten Standorts des Fahrzeugs über einen Schwellwertabstand hinaus von mindestens einem eingeschränkten Bereich weg gemäß einer Bestimmung, dass der Standort des Fahrzeugs innerhalb eines Schwellwertabstands von mindestens einem eingeschränkten Bereich positioniert ist;
Erzeugen des aktualisierten Navigationspfades mindestens unter Verwendung des projizierten Standorts des Fahrzeugs; und
Ausführen des aktualisierten Navigationspfades zum Navigieren des Fahrzeugs,
**dadurch gekennzeichnet, dass** das Erzeugen eines projizierten Standorts des Fahrzeugs über den Schwellwertabstand hinaus weg von dem mindestens einen eingeschränkten Bereich Folgendes umfasst:
Erzeugen einer Vielzahl von Projektionen vom erhaltenen Standort des Fahrzeugs zu der Vielzahl von Segmenten;
Auswählen eines speziellen Segments mindestens teilweise auf Basis einer Länge einer jeweiligen Projektion; und
Erzeugen des projizierten Standorts gegenüber dem speziellen Segment vom erhaltenen Standort des Fahrzeugs.

## Revendications

1. Appareil (200) comprenant :
des moyens pour définir un chemin de navigation comprenant une pluralité de noeuds (331), le chemin de navigation comprenant en outre une pluralité de segments (332, 510) connectant la pluralité de noeuds ;
des moyens pour obtenir un emplacement d'un véhicule (106) ;
conformément à une détermination indiquant que l'emplacement du véhicule est positionné dans une distance seuil d'au moins une zone de contrainte (302), des moyens pour générer un emplacement projeté (404) du véhicule au-delà de la distance seuil loin de l'au moins une zone de contrainte ;
des moyens pour générer un chemin de navigation mis à jour en utilisant au moins l'emplacement projeté du véhicule ; et
des moyens pour exécuter le chemin de navigation mis à jour pour la navigation du véhicule,
**caractérisé en ce que**
les moyens pour générer un emplacement projeté du véhicule au-delà de la distance seuil loin de l'au moins une zone de contrainte comprennent :
des moyens pour générer une pluralité de projections, de l'emplacement obtenu du véhicule à la pluralité de segments ;
des moyens pour sélectionner un segment particulier en se basant au moins en partie sur la longueur d'une projection respective ; et
des moyens pour générer l'emplacement projeté opposé au segment particulier à partir de l'emplacement obtenu du véhicule.

2. Appareil de la revendication 1, dans lequel l'emplacement projeté du véhicule est généré en se basant au moins en partie sur la minimisation d'une distance entre l'emplacement projeté du véhicule et l'emplacement obtenu du véhicule.

3. Appareil de l'une des revendications précédentes, dans lequel une projection de la pluralité de projections est au moins sensiblement normale à un segment respectif.

4. Appareil de l'une des revendications précédentes, dans lequel l'emplacement projeté est positionné opposé au segment particulier à une distance configurable en se basant au moins en partie sur une précision associée à l'emplacement obtenu du véhicule et/ou la longueur de la projection respective.

5. Appareil de l'une des revendications précédentes, dans lequel l'emplacement du véhicule se trouve dans une zone autorisée définie par une zone de contrainte environnante, et dans lequel la pluralité de noeuds sont positionnés au-delà de la distance seuil, à l'intérieur de la zone de contrainte environnante et au-delà de la distance seuil à l'extérieur d'une ou plusieurs zones de contrainte positionnées dans la zone autorisée.

6. Appareil de l'une des revendications précédentes, dans lequel le chemin de navigation mis à jour comprend une première partie allant de l'emplacement obtenu du véhicule à l'emplacement projeté, et une deuxième partie allant de l'emplacement projeté à un emplacement cible, en passant par un ou plusieurs noeuds et un ou plusieurs segments du premier chemin de navigation.

7. Appareil de l'une des revendications précédentes, dans lequel le chemin de navigation mis à jour est généré en se basant au moins en partie sur l'ajout d'un ou plusieurs segments au chemin de navigation pour connecter l'emplacement projeté au chemin de navigation, dans lequel les un ou plusieurs segments ajoutés sont positionnés au-delà d'une distance loin de l'au moins une zone de contrainte.

8. Appareil de l'une des revendications précédentes, dans lequel les une ou plusieurs zones de contrainte comportent une zone de contrainte définie dynamiquement en se basant au moins en partie sur un déplacement historique confiné et répété du véhicule.

9. Appareil de l'une des revendications précédentes, dans lequel le premier chemin de navigation est un graphique de visibilité.

10. Procédé comprenant les étapes suivantes :
définir (701) un chemin de navigation comprenant une pluralité de noeuds, le chemin de navigation comprenant en outre une pluralité de segments connectant la pluralité de noeuds ;
obtenir (702) un emplacement d'un véhicule ;
conformément à une détermination indiquant que l'emplacement du véhicule est positionné dans une distance seuil d'au moins une zone de contrainte, générer un emplacement projeté du véhicule au-delà de la distance seuil loin de l'au moins une zone de contrainte ;
générer (707) un chemin de navigation mis à jour en utilisant au moins l'emplacement projeté du véhicule ; et
exécuter le chemin de navigation mis à jour pour la navigation du véhicule,
**caractérisé en ce que** la génération d'un emplacement projeté du véhicule au-delà de la distance seuil loin de l'au moins une zone de contrainte comprend :
la génération (704) d'une pluralité de projections, de l'emplacement obtenu du véhicule à la pluralité de segments ;
la sélection (705) d'un segment particulier en se basant au moins en partie sur la longueur d'une projection respective ; et
la génération (706) de l'emplacement projeté opposé au segment particulier à partir de l'emplacement obtenu du véhicule.

11. Procédé de la revendication 10, dans lequel l'emplacement projeté du véhicule est généré en se basant au moins en partie sur la minimisation d'une distance entre l'emplacement projeté du véhicule et l'emplacement obtenu du véhicule.

12. Procédé de la revendication 10 ou la revendication 11, dans lequel une projection de la pluralité de projections est au moins sensiblement normale à un segment respectif.

13. Procédé de l'une des revendications 10 à 12, dans lequel l'emplacement projeté est positionné opposé au segment particulier à une distance configurable en se basant au moins en partie sur une précision associée à l'emplacement obtenu du véhicule et/ou la longueur de la projection respective.

14. Procédé de l'une des revendications 10 à 13, dans lequel les une ou plusieurs zones de contrainte comportent une zone de contrainte définie dynamiquement en se basant au moins en partie sur un déplacement historique confiné et répété du véhicule.

15. Produit de programme informatique comprenant un support de stockage non transitoire lisible par ordinateur sur lequel sont stockées des parties de code de programme, les parties de code de programme étant configurées, lors de l'exécution, pour :
définir un chemin de navigation comprenant une pluralité de noeuds, le chemin de navigation comprenant en outre une pluralité de segments connectant la pluralité de noeuds ;
obtenir un emplacement d'un véhicule ;
conformément à une détermination indiquant que l'emplacement du véhicule est positionné dans une distance seuil d'au moins une zone de contrainte, générer un emplacement projeté du véhicule au-delà de la distance seuil loin de l'au moins une zone de contrainte ;
générer un chemin de navigation mis à jour en utilisant au moins l'emplacement projeté du véhicule ; et
exécuter le chemin de navigation mis à jour pour la navigation du véhicule,
**caractérisé en ce que** la génération d'un emplacement projeté du véhicule au-delà de la distance seuil loin de l'au moins une zone de contrainte comprend :
la génération d'une pluralité de projections, de l'emplacement obtenu du véhicule à la pluralité de segments ;
la sélection d'un segment particulier en se basant au moins en partie sur la longueur d'une projection respective ; et
la génération de l'emplacement projeté opposé au segment particulier à partir de l'emplacement obtenu du véhicule.
